# EUROPEAN PATENT SPECIFICATION

(11) **EP 3 697 364 B1**
(45) Date of publication and mention of the grant of the patent: **27.04.2022**
(21) Application number: 18796598.3
(22) Date of filing: 17.10.2018
(51) Int. Cl.: A61H 3/04, A61H 3/00, B62B 7/00, B62B 9/00, B60B 25/02

(54) **PERSON TRANSPORTATION AIDS AND DEVICES**
PERSONENBEFÖRDERUNGSHILFEN UND -VORRICHTUNGEN
AIDES ET DISPOSITIFS DE TRANSPORT DE PERSONNE

(30) Priority: 19.10.2017 GB 201717154
(43) Date of publication of application: 26.08.2020
(73) Proprietor: Rayne, Damian, London W11 1LR (GB)
(72) Inventor: Rayne, Damian, London W11 1LR (GB)
(74) Representative: Ridley, Daniel
(86) International application number: PCT/EP2018/078436
(87) International publication number: WO 2019/076991

(56) References cited:
- WO-A2-2013/162354
- FR-A1- 2 985 453
- KR-B1- 101 477 459
- US-A- 5 669 619
- US-A1- 2013 228 989

## Description

The present invention relates to person transportation aids and devices. In particular, but not exclusively, the present invention relates to a wheeled personal mobility aid and a wheeled child transportation device.

The design of many known child, e.g. baby, transportation devices, particularly wheeled child transportation devices and, more particularly still, perambulators, buggies and strollers, is such that, in use, a parent pushes the transportation from behind. A problem with child transportation devices designed in such a way is that the child is ahead of the parent in the direction of travel. This is a particularly dangerous arrangement for the child as the child may be pushed into dangerous situations ahead of the parent. Children in such devices are therefore particularly vulnerable.

A particularly dangerous scenario arises when crossing roads. This is because the parent must push their child ahead of themselves and so expose the child to the risk of traffic colliding with the child transportation device before the parent may become aware that traffic is approaching. This is especially so near road crossings which are situated near to a high wall or other obstruction such that the parent is unable to see sufficiently far along the road to check for approaching traffic. In such circumstances, the parent may tend to push the child transportation device into the road, and therefore expose the child to the risk of a collision, before the parent is able to fully check that it is safe to do so.

Furthermore, child transportation devices are heavy, cumbersome and are difficult to manoeuvre as their centre of yaw is positioned far ahead of the parent so the parent has to apply a significant moment to the device in order to steer. Not only is this a disadvantage in itself but, in the scenario described above, makes it difficult for the parent to quickly manoeuvre the child transportation device out of danger if they become aware of that danger at short notice.

Furthermore, many child transportation devices are very difficult to use while ascending or descending flights of stairs and it is very common for the parent to have to seek assistance from another person in lifting and carrying the child transportation device entirely over the flight of stairs. Often the child, particularly when the child concerned is a baby, remains inside the child transportation device when it is lifted in this way and so, as the weight of such devices combined with the weight of the child can be very heavy and with a high centre of gravity, this can be a very precarious operation as, while carrying the device over the stairs, both the parent and helper must also simultaneously navigate the flight of stairs themselves and ensure their good-footing. Such an operation therefore puts the child at a high risk of injury if the device is accidentally dropped and/or if the child is not properly secured to the device.

Even with a single step, for example a roadside curb, navigating the child transportation device over the step can be burdensome and difficult. Parents must pivot the child transportation device rearward on the rear wheels such that the front wheels are lifted sufficiently high enough to overcome the height of the curb and then they must push the device forward and then pivot the device forwards on the front wheels so that the rear wheels are lifted over the curb. Such an operation is slow and inconvenient as it requires the parent to stop the child transportation device in order to cross the curb. It is also a jerky manoeuvre and may be uncomfortable for the child, who may be woken as a result. When crossing roads, such a manoeuvre may also delay both the parent and child in the path of oncoming traffic, thereby putting the child and parent at avoidable risk.

Many known child transportation devices can also be very difficult and uncomfortable for the parent to use. In devices in which the parent must push from behind, the parent pushes with their arms out in front of them and, not only is this a fatiguing and uncomfortable position for the arms and shoulders in itself, but, in such a position, the parent is likely to stoop by bending their back while pushing the device, particularly if the combined weight of the device and child is heavy, and this may put the parent at increased risk of back injury.

A further problem with known child transportation devices is that they can be difficult to transport and store when not in use. Many are collapsible, to varying degrees, in an attempt to alleviate this problem to a certain extent, but still problems remain in providing a child transportation device which is compact enough to be easily transported and light as well as portable enough that it may be easily removed from, for example, a car boot, without the parent having to bend over and reach a long way into a car boot. A parent attempting to remove an unwieldy child transportation device from a car may cause damage to the car, or the child transportation device and may put the parent at increased risk of injury to himself or herself.

There is also an emerging problem with existing prams and the like in that the parents may often be distracted by portable electronic devices while pushing the pram. There therefore exists the need to provide a child transportation device which facilitates the usage, and storage, of such devices while improving the safety of the child.

In child transportation devices in which the child is forward-facing and wherein the device is pushed from the rear, there also exists the problem that there may be a lack of parent-child eye contact. Not only may this be distressing for the child but it may also mean that it is more difficult for the parent to monitor and observe the child, which may put the child at risk.

Similar problems exist with known walking aids, for example walking frames such as wheeled walking frames. Such aids may be heavy, difficult to manoeuvre, may require consecutive lifting and repositioning (as does a conventional walking frame, for example), may tend to cause fatigue in the outstretched arms of a user or may predispose the user to stoop their back, may be difficult to store, and may be difficult and cumbersome to lift over curbs and stairs. Many are also operated by the user grasping a handle or grasping the frame itself and many require two-handed operation, thereby making it difficult for the user to operate the walking aid while also keeping one or both of their hands free, for example for operating a portable electronic device.

US 5 669 619 A discloses a portable wheelchair. The wheelchair includes a seat assembly having a seat and a back rest, and a footrest having at least one guiding wheel. The seat assembly and the footrest are selectively secured between a first wheel and a second wheel. The first wheel includes a first tire mounted on a first rim and the second wheel includes a second tire mounted on a second rim, wherein a first cross-brace releasably couples the seat assembly to the first wheel and a second cross-brace releasably couples the seat assembly to the second wheel. The first cross brace includes a first motor and the second cross brace includes a second motor, wherein the first motor and the second motor are respectively coupled to the first wheel and the second wheel to facilitate movement of the wheelchair.

FR 2 985 453 A1 discloses an orbital-type foldable wheel for us in a mobility system used by a disabled person.

WO 2013/162354 A2 discloses a walker device with a sitting assembly.

US 2013/228989 A1 discloses a hubless wheel and stroller.

KR 101 477 459 B1 discloses a folding type apparatus for walking assistance.

The present invention aims to alleviate, at least to a certain extent, the problems and/or address at least to a certain extent the difficulties associated with the prior art.

The present invention is directed to a wheeled personal mobility aid and a wheeled child transportation device according to claim 1 and 2, respectively.

According to a first aspect of the present invention, there is provided a wheeled personal mobility aid comprising a wheel, a carriage configured to be moveable, such as by rotation, circumferentially around the wheel, and a user support means for supporting a user while walking, the user support means being coupled to the carriage. For example, the user support means may be attached to, e.g. rotatably attached to, the carriage. A wheeled personal mobility aid comprising a user supporting carriage configured to be moveable, such as by rotation, circumferentially around a ground-engageable wheel for propulsion of the aid provides a rest or support for the user which is able to move smoothly along with the user as he or she walks to provide continuous support, while also enabling the aid to traverse rough or irregular terrain or overcome obstacles such as steps due to the relatively large diameter of the ground-engageable wheel. The support also advantageously remains at a constant height while being propelled and the mobility aid does not require constant repositioning, as a traditional walking frame does.

The user support means is configured to receive an upper limb of a user. By receiving an upper limb of a user, the user is able to lean naturally on the mobility aid for support and to transfer some of their body weight through the mobility aid, as they naturally might do as if another person was supporting them by their arm or shoulder. Receiving an upper limb of a user also enables the mobility aid to be positioned to one side of the user while in use such that the mobility aid does not obstruct or limit the range of motion of the user's legs while walking. A mobility aid positioned to one side of a user is also more easily steerable as the user is able to steer the mobility aid by, for example twisting their torso. Mobility aids which are positioned in front of a user often require that the user supports themselves by reaching forwards to grasp the aid and thus can cause fatigue in the arms and/or shoulders of the user who must maintain the mobility aid far enough ahead of themselves so that their legs are able to move freely without colliding with the aid.

The user support means comprises a handle or handgrip. A handle or handgrip enables the user to more securely grasp the mobility aid and to transmit motive force to the mobility aid to push, pull or steer the mobility aid. Handgrips or handles may also enable the mobility aid to be more easily carried when not in use and be more easily lifted from, or placed into, a storage place.

Optionally the user support means comprises an elbow rest or forearm rest. An elbow rest or forearm rest enables the user to transmit a portion of their bodyweight at a short lever arm and therefore the user's shoulder muscles, but also triceps and biceps, are required to provide a reduced moment in order to support the user. An elbow rest or forearm rest therefore reduces muscle fatigue.

Optionally the user support means is rotatably coupled to the carriage. Such a feature enables the user support means to be rotated with respect to the carriage, accordingly enabling the user to angle the user support means according to their preference, for example in order to increase comfort.

Optionally the user support means comprises a height adjustment means for selectively spacing the user support means or a portion thereof with respect to the carriage. A height adjustment means enables the height of the user support means from the ground to be adjusted according to a preference of the user. As such, such a height adjustment means increases the comfort of the device as it more readily accommodates users of various heights without the user having to stoop or otherwise adjust their posture to use the device.

According to a second aspect of the present invention, there is provided a wheeled child transportation device comprising a child support means, a wheel, a carriage configured to be moveable, such as by rotation, circumferentially around the wheel, and a user control means coupled to the carriage for enabling a user to control movement of the wheeled child transportation device. Such a wheeled child transportation device enables a user to push their child alongside them while in use which is not only advantageous in freeing up one of their hands but also provides that the child is not being pushed into potentially dangerous situations ahead of the parent, thereby providing a safer child transportation device.

Optionally the control means is configured such that the child transportation device may be propelled by a user applying a motive force upon the control means, thereby causing the carriage to rotate circumferentially around the wheel. Although examples are envisaged wherein the child transportation device is self-propelled (for example, wherein the child transportation device comprises a motor for propelling the child transportation device), one example is propelled solely (and in other examples, additionally or alternatively to a motor) by a user pushing the device along. In such examples, the control means is configured to receive a motive force from the user in order to propel the device.

The control means is configured to receive a portion of an upper limb of a user.

A user is therefore able to control the movement (i.e. locomotion) and/or steering of the device by applying a motive force through an upper limb, e.g. arm. Advantageously, this is an instinctive way for a user to push and steer the device.

The control means comprises a handle or handgrip. A handgrip or handle enables the user to more securely grasp the device and to transmit motive force to the device to push, pull or steer the device. Handgrips or handles may also enable the device to be more easily carried when not in use and more easily lifted from, or placed into, a storage place.

Optionally the control means comprises a forearm rest or elbow rest. An elbow rest or forearm rest enables the user to transmit a portion of their bodyweight at a short lever arm and therefore the user's shoulder muscles, but also triceps and biceps, are required to provide a reduced moment in order to support the user. An elbow rest or forearm rest therefore reduces muscle fatigue.

The child support means comprises a mount for a child seat. A mount for a child seat enables a child seat to be securely mounted to the child support means.

Optionally the circumferential position of the child support means about the wheel is fixed relative to circumferential position of the carriage about the wheel. Such a feature enables child support and, in some examples, thereby the child seat to be controllable by the user via the user control means.

Optionally the child transportation device comprises mounting means for detachably attaching the child support means to the child transportation device. As such, the child support means may be removed from the device, for example to enable the device to be stored more easily or to enable the wheeled child transportation device to be used as a wheeled personal mobility aid.

Optionally the child support means is substantially spaced away from the plane of rotation of the wheel. A child support means, for example a child seat, being spaced to one side of the wheel enables the wheel to be positioned closer to the user in use and therefore enables the user to hold the device closer to their body for increased comfort.

Optionally the wheel of the personal mobility aid or of the wheeled child transportation device comprises a circumferential rail. A circumferential rail may enable certain components to be more readily or more conveniently mounted to, or rotatably coupled to, or moveable around the wheel. Such components may also be laterally restrained by the rail such that the components, e.g. the upper or lower carriage, maintain their alignment with respect to the wheel and thereby facilitate the rotation of the wheel with respect to such components.

The wheel of the personal mobility aid or of the wheeled child transportation device is a centreless wheel. A centreless wheel is advantageous as, not only may it be more atheistically pleasing, but it also provides an annular space where other components may be provided, for example for additional functionality. In the wheeled child transportation device, a centreless wheel enables a child seat, or a portion thereof, to be positioned within the annular space of the centreless wheel and therefore to reduce the overall width of the device, thereby reducing the distance of the centre of gravity and centre of yaw of the device from the user and thereby improving easy of handling and reducing fatigue of the user.

Optionally the wheel of the personal mobility aid or of the wheeled child transportation device is foldable. A foldable personal mobility aid or wheeled child transportation device enables the device to be more easily stored or carried when not in use.

Optionally the wheel of the personal mobility aid or of the wheeled child transportation device comprises at least two hinges circumferentially spaced from each other about the circumference of the wheel. A wheel comprising circumferentially spaced hinges enables the wheel to be folded, for example generally in half, thereby enabling the overall size of the device to be reduced.

Optionally at least two of the hinges are substantially diametrically opposed about the wheel with respect to each other. Diametrically opposed hinges enable the wheel to be folded in half, thereby enabling the overall height of the wheel to be minimised while folded.

The wheel of the personal mobility aid or of the wheeled child transportation device is a locomotive wheel for propelling the aid or device. As such the wheel may be a ground-engageable wheel.

Optionally the outer circumferential surface of the wheel comprises circumferentially spaced segments. The wheel may comprise a tread. The tread may comprise circumferentially spaced segments. The circumferentially spaced segments provide a means for engaging an obstacle, such as a step, for facilitating the device to be more easily used or propelled, e.g. pushed, over the obstacle.

Optionally the segments comprise a step-engageable portion configured to engage a step. Optionally the segments comprise rubber. Rubber is inexpensive, wear resistant and rubber segments provide a high coefficient of friction between the wheel and the ground. The rubber segments may be individually replaceable.

The personal mobility aid or the wheeled child transportation device further comprises a second carriage configured to be rotatable circumferentially around the wheel. A second carriage advantageously provides means of mounting additional components thereto, for example a bag, child seat, child seat mount, stabilising arm, or stabilising wheel etc.

The circumferential spacing between the second carriage and the first carriage about the wheel is substantially fixed. A fixed circumferential spacing between the first and second carriage enables the position of the second carriage to be maintained with respect to the first carriage and also to be positioned by a user via the user support means.

Optionally the first and second carriages are generally diametrically opposed to each other with respect to the wheel. Thus, when in use, the first carriage may be generally towards the top of the wheel while the second carriage may be maintained generally towards the bottom of the wheel.

Optionally the personal mobility aid or the wheeled child transportation device further comprises a stabiliser wheel positionable substantially to one side of the plane of rotation of the wheel. A stabiliser wheel increases the stability of the wheel, for example about the roll axis, and thereby provides a more stable aid for the user to lean on or against.

Optionally the stabiliser wheel is connected to the second carriage by an arm pivotably coupled to the second carriage. As such, the stabiliser wheel may be deployable when desired, or stowed when not in use. Advantageously, a deployable stabiliser wheel provides a more compact and portable device or aid.

Optionally the arm comprises a suspension mechanism configured to provide suspension to the arm. As such, the arm, or a coupling between the arm and the lower carriage, may be sprung-loaded and may comprise a spring. In examples wherein a child support means or child seat is provided on or mounted to the arm, a suspension mechanism provided on the arm provides for a more comfortable ride for the child. Additionally, a vertically moveable suspension mechanism on the arm provides for a more stable device or aid because the effect of bumps in the ground on the roll (i.e. movement about the roll axis) of the device or aid is reduced as the arm is able to move vertically with respect to the lower carriage to accommodate for vertical displacement caused when the arm travels over a bump.

Optionally at least one of the carriages includes a wheel-engagement means comprising a plurality of wheels configured to engage opposing sides of the circumferential rail. In this way, the carriages may be laterally located with respect to a rim of the wheel such that the carriages are configured to generally or substantially follow the circumference of the wheel when moving relative thereto.

Optionally the circumferential rail comprises two generally opposing concave surfaces. Generally opposing concave surfaces provide a particularly stiff rail, particularly in compression.

Optionally the wheels of the wheel-engagement means of at least one of the carriages engage the generally opposing concave surfaces. Thus, the rim is able to support both lateral and vertical loads transmitted from the carriage.

Optionally at least one of the carriages comprises a motor for rotating the wheel with respect to the carriage. A motorised device or aid may provide assistive power propulsive power and thereby make the device or aid easier and less tiring to use.

Optionally the second carriage comprises a dynamo for converting rotational energy of the wheel into electrical energy and a battery for storing electrical energy converted by the dynamo. Thus, kinetic energy of the wheel may be recovered at least to a certain extent and stored in a battery. In examples comprising a motor for rotating the wheel with respect to a carriage, the battery may be used to energise the motor. Thus, kinetic energy recovery in this way may be used to extend the range of the device under motor-assistance before the battery needs to be re-charged or replaced.

Optionally the personal mobility aid or the wheeled child transportation device comprises a personal electrical device dock for receiving a personal electrical device and for supplying electrical energy to the personal electrical device from the battery. A personal electrical device dock, such as a mobile phone dock or portable music player dock, provides a safe and convenient means of holding and operating, in particular operating with a single hand, a personal electrical device while the user is using the device or aid. Kinetic energy from the wheel may be used to charge the battery of the personal electrical device while it is received in the dock. The personal electrical device may be a mobile (i.e. cellular) telephone.

Optionally the second carriage comprises braking means for braking the personal mobility aid or the wheeled child transportation device, the braking means comprising at least one ground-engagement portion extending therefrom generally radially outwardly with respect to the wheel. Such a braking means may also be referred to as a ground-engagement or ground-engageable protrusion and may comprise a brake pad, for example a rubber brake pad.

The carriage is attached to the second carriage. The first carriage is fixed to the second carriage, for example by a rod or bar or other such mechanical linkage or by a structural member. Thus, loads from the user support means or user control means, for example compressive (particularly generally vertical) loads may be transmitted directly from the first carriage to the second carriage and then through a lower portion of the wheel to the ground. Advantageously, such an arrangement provides that loads through the ground-engageable wheel may be reduced and, as such, the wheel may be made lighter than might otherwise be possible, thereby reducing the overall weight of the device or aid.

The first carriage is fixed to the second carriage by an arcuate bar provided on an interior space of the wheel, the barbeing curved such that it generally follows the curvature of a circumference of the wheel, for example an inner circumference of the wheel. Thus, when the ground-engageable wheel is a centreless wheel (i.e. a hubless or spokeless wheel), the first and second carriage may be fixed and able to transmit loads between each other while reducing the loading transmitted through the portion of the ground-engageable wheel between the two carriages, while also maximising the available space within the annulus of the wheel.

The second carriage includes the child support means. Advantageously, as the second carriage may be arranged, for example in use, on a lower portion of the ground-engageable wheel, load from the child may be transmitted through the lower portion of the wheel, thereby reducing buckling loads on the wheel and making the wheel less susceptible to buckling.

Optionally the mounting means is provided on the second carriage.

Optionally the mounting means is provided on the arm.

The personal mobility aid comprises a mount for a child seat, the mount being configured such that, when a child seat is mounted to the mount, the child seat is generally spaced to one side of the plane of rotation of the wheel. Advantageously, as the mount is configured such that, when a child seat is mounted to the mount, the child seat, and thereby child, is generally or at least partially spaced to one side of the plane of rotation of the ground-engageable wheel, such a feature provides that the child seat is spaced away from the user's legs thereby enabling the user to hold the aid or personal mobility aid closer to their body, thereby increasing the comfort of the user and the ease of use of the device or aid. When the stabilising arm comprising the child seat mount and the child seat mount is configured such that a child seat mounted thereto is spaced away from the plane of rotation of the wheel, the device or aid is especially stable as the centre of mass of the child is spaced between the stabilising wheel and the ground-engageable wheel, thereby increasing the stability of the device in the roll axis.

Optionally the mount is provided on the second carriage.

Optionally the second carriage comprises actuating means for selectively moving the second carriage about the wheel with respect to the first carriage. Advantageously this enables the angle between the first and second carriages to be varied and therefore to enable the second carriage to be pivoted away from stairs, for example, or to pivot the first carriage forward or backward for improved comfort.

Optionally the actuating means comprises foot-receiving means configured such that the user may move the second carriage with respect to the first carriage by engaging their foot with the foot-receiving means. Foot receiving means enables the actuating means to be actuated without the user having to use their hands or arms, and thereby not having to remove their hand or arm from the armrest on the first carriage, for example.

Optionally the second carriage further comprises a ride-on support means configured to receive a user in a standing position to enable the user to ride on the device or aid. Such a feature enables a passenger to be carried along on the device or aid. Such a passenger could be a child or even the user of the device or aid itself.

Optionally the ride-on support means is configured to be detachably attachable to the second carriage. In this way, a more portable or stowable device or aid can be provided. Optionally the ride-on support means is configured to be foldable.

Optionally the ride-on support means comprises an annular support member, the annular support member optionally comprising caster wheels configured to support the weight of a user supportable by the ride-on support means. Such wheels enable for a light construction of the support platform to be used.

Optionally the arm comprises a rotatable coupling configured to enable a first part of the arm to rotate out of plane with respect to a second part of the arm, wherein one of the first or second parts of the arm comprises the stabilising wheel. Thus, the height of the wheels with respect to the ground may be varied.

Optionally the rotatable coupling is configured to define a plurality of predetermined rotational positions. Such positions may provide for low, medium and high settings for the height of the wheels with respect to the ground.

Optionally the rotatable coupling further comprising rotation locking means configured to lock the rotatable coupling at one of the predetermined rotational positions. Thus, the height of the wheels in each of the predetermined positions may be easily maintained.

The present invention may be carried out in various ways and preferred embodiments of a wheeled personal mobility aid and a wheeled child transportation device in accordance with the present invention will now be described by way of example with reference to the accompanying drawings, in which:
Fig. 1 is a perspective view of a mobility aid according to the present invention;
Fig. 2 is a side view of a second mobility aid according to the present invention, substantially similar to the first with the exception that the wheel is foldable;
Fig. 3 is a front view of the mobility aid of Fig. 2, showing a stabilising arm deployed to one side;
Fig. 4 is a rear view of the mobility aid of Figs. 2 and 3;
Fig. 5 is a plan view of the mobility aid of Figs. 2, 3 and 4;
Fig. 6 is a series of perspective views of parts of the embodiment of Figs. 2 to 5;
Fig. 7 is a perspective view of a first, or upper, carriage and user support means of each of the embodiments of the present invention, although other upper carriage and user support means may be used;
Fig. 8 is a perspective view of the upper carriage wheel support frame, supporting wheels for engaging the rim of a main, ground-engageable wheel;
Fig. 9 is perspective view of the lower carriage wheel support frame, supporting wheels for engaging the rim of the ground-engageable wheel;
Fig. 10 is a cross-sectional view of the lower carriage, showing the carriage wheels engaging the rim of the main, ground-engageable wheel;
Fig. 11 is a perspective view of a second, or lower, carriage of each of the embodiments of the present invention, although other upper carriage and user support means may be used;
Fig. 12 is a cross-sectional view of parts of each of the embodiments of the present invention, showing the ground-engageable wheel and both upper and lower carriages;
Fig. 13 is an exploded view of the upper carriage of each of the embodiments of the present invention, although other upper carriages may be used;
Fig. 14 is a cross-sectional side view of the upper carriage of each of the embodiments of the present invention;
Fig. 15 is a perspective view of parts of each of the embodiments of the present invention, showing the dynamo mechanism;
Fig. 16 is a perspective view of parts of the lower carriage, showing the arrangement of the dynamo mechanism within the lower carriage;
Fig. 17 is a side cross-sectional view of parts of each of the embodiments of the present invention, showing the lower carriage and the dynamo mechanism engaging with a energy recovery wheel, engaging the rim of the ground-engageable wheel;
Fig. 18 is a front cross-sectional view of parts of each of the embodiments of the present invention, showing the lower carriage, dynamo mechanism and ground-engageable wheel;
Fig. 19 is a side cross-sectional view of parts of each of the embodiments of the present invention, showing the opposite side of the lower carriage as that shown in Fig. 17;
Fig. 20 is side cross-sectional view of parts of each of the embodiments of the present invention, showing the upper carriage;
Fig. 21 is a rear cross-sectional view of the upper carriage of Fig. 20;
Fig. 22 is a rear view of the upper carriage of Figs. 20 and 21, showing the aperture in the upper carriage housing through which the ground-engageable wheel is configured to rotate, and further showing a pair of taillights;
Fig. 23 is a rear cross-sectional view of parts of each of the embodiments of the present invention, showing the rotatable coupling between the upper carriage of Figs. 20 to 22 with a user support means, which may also be referred to as a user control means (especially, for example, where the invention relates to a wheeled child transportation device);
Fig. 24 shows side views and a plan view of the rotatable coupling mechanism shown in Fig. 23 in an engaged and in a disengaged position;
Fig. 25 is a plan view of parts of an optional stabiliser of each of the embodiments of the present invention, the stabiliser comprising a support arm comprising a stabiliser wheel;
Fig. 26 is a side view of the stabiliser of Fig. 25;
Fig. 27 is a front view of the stabiliser of Figs. 25 and 26;
Fig. 28 is a perspective view of the stabiliser showing a brake engagement selector in cross-section;
Fig. 29 is an exploded view of parts of the brake engagement selector of Fig. 28;
Fig. 30 is a side view of the mobility aid of Fig. 2 shown in a folded configuration;
Fig. 31 is a rear view of the mobility aid of Fig. 2 shown in a folded configuration;
Fig. 32 is a plan view of the mobility aid of Fig. 2 shown in a folded configuration;
Fig. 33 is a front view of the mobility aid of Fig. 2 shown in a folded configuration, showing the hinge and locking means;
Fig. 34 is a front view of the mobility aid of Fig. 33 shown in an unfolded configuration;
Fig. 35 is a side view of the mobility aid of Fig. 33 in the folded configuration;
Fig. 36 is a side view of the mobility aid of Fig. 34 in the unfolded configuration;
Fig. 37 is a side view of the locking means shown in an unlocked configuration while the mobility aid of Fig. 2 is folded;
Fig. 38 is a perspective view of a wheeled child transportation device according to the present invention, showing a child seat attached thereto;
Fig. 39 is a perspective view of a second wheeled child transportation device according to the present invention, substantially similar to that shown in Fig. 38 but with a child seat mount mounted thereto and with a child car seat, such as a conventional child car seat, attached to the child seat mount; for illustration, the lower carriage is not shown;
Fig. 40 is a plan view of parts of the child seat mount of Fig. 39, mounted to the stabilising arm;
Fig. 41 is a front view of the lower portion of the ground-engageable wheel shown in Fig. 40 with a portion of the mounting mechanism of the child seat mount shown in cross-section;
Fig. 42 is a side view of the child seat mounting mechanism of Fig. 41;
Fig. 43 is a plan view of the lower portion of the child seat mounting mechanism shown in Fig. 42;
Fig. 44 is a side cross-sectional view of the child seat mounting mechanism shown in Figs. 41, 42 and 43, showing a locking bolt engaging with the upper and lower portions of the child seat mounting mechanism;
Fig. 45 is a plan view of parts of a further child seat mount in an unextended, i.e. retracted or collapsed, configuration;
Fig. 46 is a plan view of the child seat mount of Fig. 45 in an extended configuration;
Fig. 47 is a rear cross-sectional view of parts of the wheeled child transportation device of Fig. 39, showing the car seat mount of Figs. 45 and 46 in the unextended configuration, mounted to the lower carriage;
Fig. 48 is a rear cross-sectional view of parts of the wheeled child transportation device of Fig. 39, showing the car seat mount of Fig. 48 in the extended position, mounted to the lower carriage and the stabilising arm;
Fig. 49 is a cross-sectional view of the child seat mount of Fig. 39 showing the extension means in further detail in the unextended configuration;
Fig. 50 is a cross-sectional view of the child seat mount of Fig. 49 showing the extension means in the extended configuration;
Fig. 51 is a plan view of the child seat mount of Fig. 45, showing the car seat mount mounted to the wheeled child transport device in an alternative configuration suitable for mounting a cot, for example, to the wheeled child transport device, wherein the mount is rotated generally perpendicularly from that shown in Fig. 39;
Fig. 52 is a plan view of parts of the wheeled child mobility device of Fig. 39, showing the mount in an extended position and in the first configuration (i.e. not the alternative second configuration shown in Fig. 51) and with a cot mounted thereto such that the cot is generally sideways-facing relative to the wheeled child transportation device and extends part-way though the annulus of the ground-engageable wheel;
Fig. 53 is a perspective view of the child seat mount shown in the configuration of Fig. 52 with a cot mounted thereto;
Fig. 54 is a side view of a ride-on platform for supporting a person, e.g. a child, which can be detachably attached to the personal mobility aid or child mobility device of the present invention, and is shown attached to the mobility aid of Fig. 2;
Fig. 55 is a top view of the ride-on platform of Fig. 54 attached, or mounted, to the mobility aid of Fig. 2;
Fig. 56 is a top plan view of the ride-on platform of Fig. 54 and 55, shown attached to a lower carriage of the personal mobility aid or child mobility device according to the present invention, the lower carriage comprising a step;
Fig. 57 is a top plan view of the ride-on platform of Figs. 54, 55 and 56 in isolation, that is, detached from the mobility aid of Fig. 2;
Fig. 58 is a side view of a hinge assembly of the ride-on platform of Figs. 54 to 57 for folding the ride-on platform to facilitate its storage;
Fig. 59 is a plan view of the hinge assembly of Fig. 58 in a closed configuration;
Fig. 60 is a side view of the hinge assembly in an open configuration, wherein, if the hinge was connected to the ride-on platform, the ride-on platform would be in a folded configuration;
Fig. 61 is a plan view of the ride-on platform of Fig. 57 shown in a folded configuration with the hinge open;
Figs. 62, 63, 64, 65, 66, 67 are top, bottom, front, rear, left and right views respectively of an optional alterative lower carriage which may be used with the child transportation device or mobility aid of the present invention.

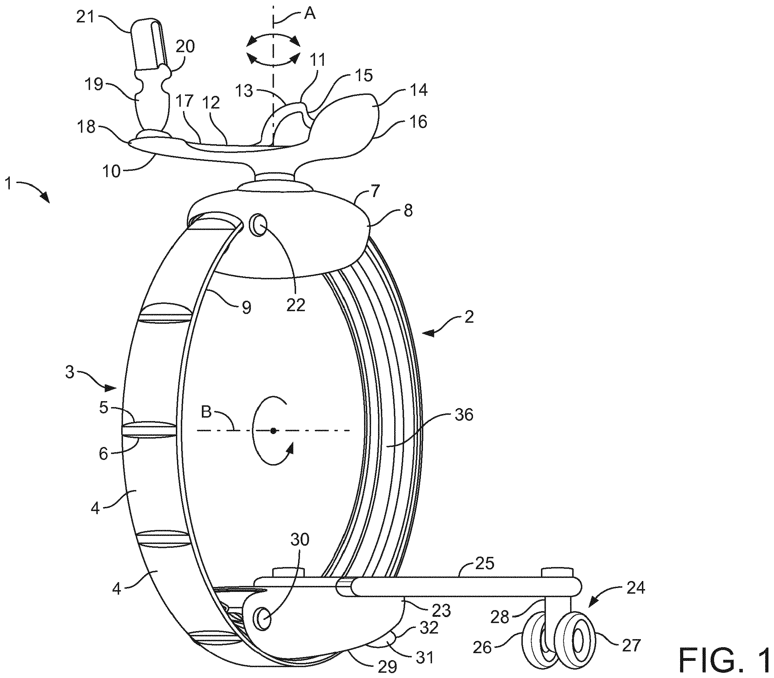

Parts of a preferred embodiment of a wheeled personal mobility aid according to a preferred embodiment of the present invention are shown in Fig. 1. The wheeled personal mobility aid 1 of Fig. 1 comprises a single ground-engageable, or locomotive, wheel 2 for propelling the mobility aid over the ground. The wheel 2 is a centreless (i.e. hubless or spokeless) wheel and, as such, comprises an annular ring. Provided on an external surface of the wheel is a tread 3. The tread 3 may be of various design but, in the example of Fig. 1, comprises a plurality of segments 4, or blocks, equally spaced, i.e. at regular intervals, about the circumference of the wheel 2. At least two opposing edges 5, 6 of the segments 4 are shaped so as to be engageable with a step or ledge, such as a curb, such that the mobility aid 1 may be levered or may otherwise climb over the step or ledge. As such, the at least two opposing edges 5, 6 may be rounded or, in the example of Fig. 1, chamfered. Other similar configurations of the tread 3 for facilitating engagement with a step or ledge are envisaged.

A first, or upper, carriage 7 is rotatably coupled, or mounted, to the wheel 2 such that it is rotatable around the circumference of the wheel 2. As such, the upper carriage 7 is configured to move along the circumference of the wheel 2. In the example of Fig. 1 the wheel 2 passes through the housing 8 of upper carriage 7, although examples wherein the housing 8 of the upper carriage 7 does not extend fully around the rim 9 of the wheel 2 and therefore only partially compasses the rim 9 of the wheel 2 are also envisaged.

A user support means 10 is provided for providing support to a user, for example while walking. The support means 10 is coupled to the upper carriage 7, e.g. attached to or mounted to, and in the example of Fig. 1 is rotatably coupled to, e.g. rotatably attached to, the upper carriage 7 such that the user support means 10 may be rotated about axis A which is generally perpendicular to the axis of rotation of the wheel 2, axis B. The rotation of the user support means 10 with respect to the upper carriage 7 may therefore be adjusted to the preference of the user and may be locked, or otherwise fixed, at a desired rotational position.

The user support means 10 comprises an upper-limb engagement portion 11, such as an arm rest (e.g. forearm rest), elbow rest, or shoulder rest (which may be configured to engage, for example, the armpit of a user). In the example of Fig. 1, the upper-limb engagement portion 11 comprises a forearm rest 12 configured to receive and support a forearm of a user and is shaped accordingly. As such, the upper-limb engagement portion 11 comprises a generally U-shaped portion 13, comprising side walls 14, 15, at a first distal end 16 thereof and an elongate portion 17 at a second opposing distal end 18, the U-shaped portion 13 being configured to engage and support an upper portion of a user's forearm by enabling side walls 14, 15 to contact a larger proportion of the external surface of a user's forearm. As side walls 14, 15 are configured to contact the sides of a user's forearm, the U-shaped portion 13 also enables the user to apply lateral forces to the user support means 10 in order to, for example, rotate the user support means 10 with respect to the upper carriage 7, or, when the user support means 10 is rotationally fixed in a desired position, steer the wheeled personal mobility aid 1.

A hand-grip 19, or handle, is provided at the second distal end 18 of the user support means 10, configured to receive a hand of the user to enable the user to grip the user support means 10. Optionally, the hand grip 19 may comprise a dock or mount 20, for example a charging-station, for receiving a portable electronic device 21, such as a mobile telephone (i.e. a cellular telephone). In some examples, the portable electronic device mount 20 may be configured to provide electricity to the portable electronic device 21 and so may comprise an electrical connector.

The upper carriage housing 8 may also comprise one or more lights, e.g. headlights 22, which, in the example of Fig. 1, are provided on both sides, i.e. the left side and the right side, of the upper carriage 7 such that they are provided generally on both sides of the rim 9 of the wheel 2. The headlights 22 are generally forward-facing but may be directed or adjustable towards other directions, for example they may be directed, or directable, generally towards the ground, for example so as to illuminate the area of the ground generally in front of the mobility aid 1.

A second, or lower, carriage 23 is rotatably coupled, or mounted, to the wheel 2 such that it is rotatable around the circumference of the wheel 2. As such, the lower carriage 23 is configured to move along the circumference of the wheel 2 in a similar way to that of the upper carriage 7. The lower carriage 23 of the example of Fig. 1 does not entirely encompass the rim 9 of the wheel 2 as the upper carriage 7 does, but instead extends partially around the rim 9 of the wheel 2 so as to enable the tread 3 of the wheel 2 to engage the ground.

The mobility aid 1 comprises a stabilising wheel 24 for providing lateral stability to the mobility aid 1. The stabilising wheel 24, or stability wheel, is mounted to the lower carriage 23 by an arm 25. The arm 25 may be rotatably coupled to the lower carriage 23 such that it may be positionable and selectably spaceable from the wheel 2 and, in some examples, may be rotatabled coupled to the lower carriage 23 such that it may be folded away such that the user may selectably deploy the stability wheel 24 when required. In the example of Fig. 1, the stability wheel 24 comprises two substantially parallel, spaced apart wheels 26, 27. The wheels 26, 27 are attached to the arm by a hub 28 therebetween which may be rotatably coupled, e.g. pivotably coupled or connected, to the arm 25.

In addition to the headlights 22 of the upper carriage 7, the housing 29 of the lower carriage 23 comprises additional headlights 30 which are also provided on both sides, i.e. the left side and the right side, of the lower carriage 23 such that they are provided generally on both sides of the rim 9 of the wheel 2. These headlights 30 are also generally forward-facing but may also be directed or adjustable towards other directions, for example they may be directed, or directable, generally towards the ground, for example so as to illuminate the area of the ground generally in front of the mobility aid.

The lower carriage 23 comprises a braking means 31 comprising at least one ground-engagement portion 32 extending therefrom generally radially outwardly with respect to the wheel 2. In the example of Fig. 1, the ground-engagement portion 32 comprises a brake pad 33 which extends from a lower portion of the lower carriage housing 29. The brake pad 33 may comprise rubber.

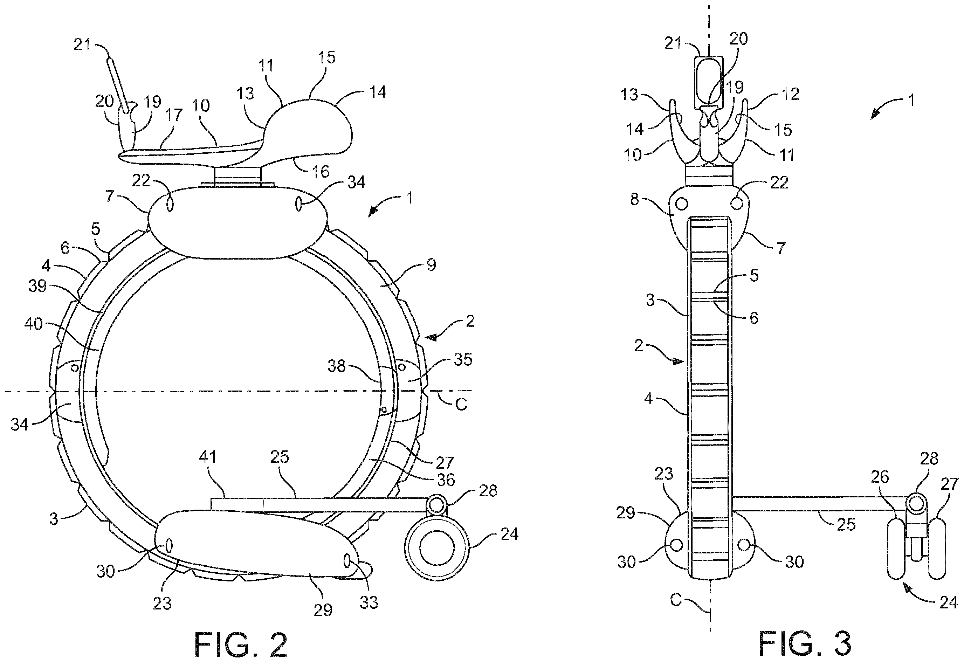

Turning now to Fig. 2, a left side view of a second example of a wheeled personal mobility aid 1 according to the present invention may be seen. The second example is identical to the first with the exception that a larger number of tread blocks 4 are provided and that the wheel 2 of the mobility aid is foldable such that it may be folded, or collapsed, generally in half, about centreline C which is generally perpendicular to both axis A and B and extends in a generally front-to-back direction, along the length of the mobility aid 1 and therefore the diameter of the wheel 2. Taillights 33, provided on the upper 7 and lower 23 carriages, can also be shown in Fig. 2, whereas they are not-visible in Fig. 1. Similarly to the headlights 22, the tail lights 33 are provided on either side of the rim 9 of the wheel 2 generally rearwardly-facing, they may be positioned or positionable such that they may be directed or directable generally towards the ground, for example so as to illuminate the area of the ground generally behind the mobility aid 1.

In order to enable the wheel 2 to be folded, two hinges 34, 35 are provided on the wheel 2. The hinges 34, 35 are substantially diametrically opposed. In the example of Fig. 2, the hinges 34, 35 are arranged so as to enable the wheel 2 to be folded in half, although they may alternatively be located higher or lower on the wheel (i.e. closer or further from the user support means 10) so as to enable the wheel 2 to fold in a different proportion than in half.

In the example of Fig. 2, and also in the example of Fig. 1, the circumferential spacing of the upper 7 and lower carriages 23 with respect to each other about the circumference of the wheel 2 is maintained, or generally fixed. As such, an arcuate support bar 36 is provided on an interior space of the centreless wheel 2, i.e. within the annulus of the wheel 2. In the example shown, the bar 36 follows in curvature a portion of the wheel 2 toward the rear of the mobility aid 1. In order to maximise the available space within the annulus of the centreless wheel 2, the bar 36 is provided next to the inner surface 27 of the rim 9 of the wheel 2 and is curved such that it generally follows the curvature of an inner circumference 27 of the wheel. A similar bar 34 is provided in the example of Fig. 1, although in the example of Fig. 2, the bar is foldable and, as such, a hinge 38 is provided part-way along the bar 34, thereby facilitating the folding of the wheel, whereas the bar 34 of Fig. 1 is not foldable and therefore does not comprise a hinge. The hinge 38 of the bar 34 is generally aligned with the hinges 34, 35 of the wheel so that the bar 36 also folds along centreline C. The support bar 36 is coupled with, e.g. attached to, both the upper and lower carriages and therefore is configured to maintain a spaced relationship between them. As such, the support bar 36 may also be referred to as a carriage spacing means. The support bar 36 acts as a structural member to advantageously enable load from the weight of a user to be transferred from the upper carriage 7, via the support bar 36, directly to the lower carriage 23. This reduces the compression force on the wheel 2 and advantageously enables the wheel 2 to be made lighter than might otherwise be possible without buckling the wheel, thereby reducing the rotational inertia of the mobility aid 1 and improving its handling characteristics as well as reducing the overall weight and size of the mobility aid 1.

On the inner circumferential surface 39 of the rim 9 towards the front of the mobility aid 1, i.e. the opposite side to that which the arcuate support bar is provided, a guard, or shield, 40 is provided. The guard 40 generally follows a portion of a circumference, e.g. the inner circumference, of the wheel 2 toward the front of the mobility aid 1. In order to maximise the available space within the annulus of the centreless wheel 2, the guard 40 is provided next to the inner surface 39 of the rim 9 of the wheel 2 and is curved such that it generally follows the curvature of an inner circumference 39 of the wheel 2. Unlike the support bar 36, the guard 40 does not comprise a hinge, although in some examples it may do. The guard 40 is attached at one end to the upper carriage 7 and, unlike the support bar 36, is not attached to the lower carriage 23 at its second end, and therefore has a free end. The guard 40 extends beyond the centreline C but does not extend all the way to the lower carriage 23.

As can be seen in Fig. 2, the lower carriage 23 is shaped and/or positioned with respect to the upper carriage 7 and/or stabilising wheel 24 such that the lower-most portion of the front of the housing 29 of the lower carriage 23 is raised so as to provide sufficient clearance between the housing 29 and the ground so that the lower carriage housing 29 does not contact steps when the mobility aid 1 is pushed against a step to enable the mobility aid 1 to more readily climb the step. In some examples, in order to provide clearance, the upper 7 and lower 23 carriages may not be diametrically opposed but may be positioned (e.g. according to the length of the support bar 36) such that the angle between them is less than 180 degrees. As such, in use, the lower carriage 23 may be more rearward than the upper carriage 7.

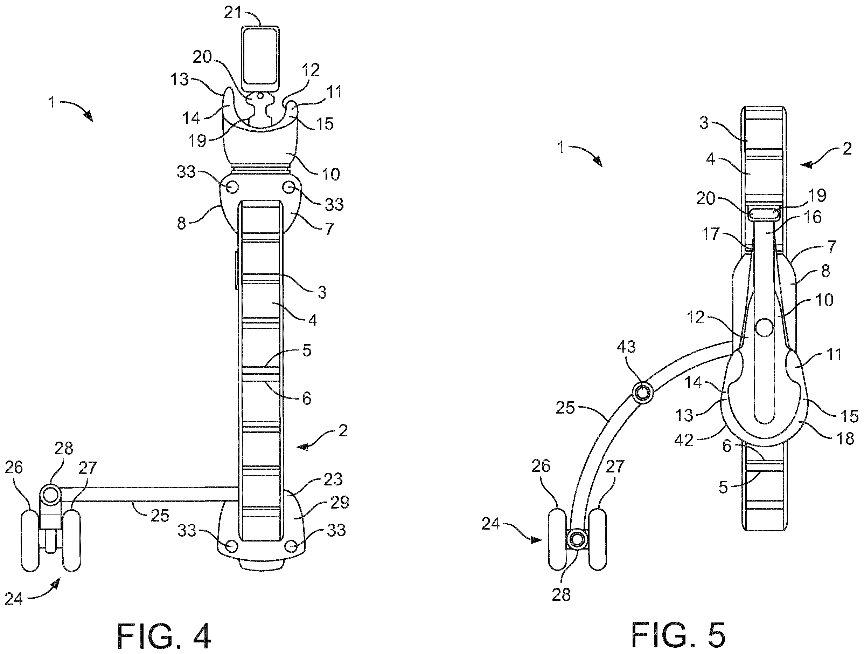

Figs. 3 and 4 illustrate a front and rear view respectively of the personal mobility aid of Fig. 2 in which the stabilising arm 25 is shown disposed or arranged to one side of the aid such that it is spaced from and extends away from the plane of rotation, plane C (shown in Fig. 3), of the ground-engageable wheel.

The stabilising arm 25 extends laterally and rearward from the second carriage 23 (i.e. lower carriage 23). The stabilising arm 25 is attached to the second carriage 23 by a rotatable coupling 41 (as can be seen in the side view of Fig. 2) between the stabilising arm 25 and the second carriage 23 which enables the arm to be selectively spaced from the plane of rotation, plane C, of the centreless wheel. The rotatable coupling also provide that the stabilising arm 25 may be folded into a folded configuration, for easy of storage and improved portability, and deployed when needed into the deployed configuration shown in Fig. 5.

A plan view of the personal mobility aid of Figs. 2 to 4 is provided in Fig. 5 which shows the shape of the stabilising arm 25. As can be seen, the stabilising arm 25 is generally arcuate, comprising a first end rotatably coupled to the second carriage 23 and a second end at which a stabilising wheel 24 is provided. The rearward positioning of the stability wheel provides improved stability of the device about the pitch axis which is particularly advantageous as the user may lean on the device rearward to provide support. In examples wherein the stabilising arm is sprung to the lower carriage, e.g. wherein it comprises a suspension mechanism, the stabilising arm may bias the device to a generally upright position, with the upper carriage being generally or substantially at the top of the ground engageable wheel 2. In further examples wherein the device additionally comprises a braking means 31 comprising a ground engageable or engagement portion, e.g. brake pad 32, the user may pivot the upper carriage 7 rearwardly (i.e. in the direction opposite to that indicated by arrow B in Fig. 1) against the biasing force provided by the sprung stabilising arm 25 to engage the ground engagement portion 32 of the braking means 31 with the ground and to thereby selectively increase the frictional braking force applied to the device according to the extent to which the upper carriage is pivoted rearwardly. As the stabilising arm 25 has a generally or substantially circular cross-section substantially along its length, it may also be referred to as a stabilising bar.

A mounting means, such as mounting point 43, is optionally provided generally on the upper surface of the stabilising arm 25 and, as can be seen in Fig. 5, part way along the length of the stabilising arm 25 and, in the example shown, generally mid-way along its length. The mounting point 43 is configured to receive a child support, for example a child seat or a child seat mount, as described below.

A plan view of the user support means 10 can also be seen in Fig. 5. The side-walls 14, 15 of the U-shaped portion 13 of the upper-limb engagement portion 11, are joined towards their rear by an arcuate wall 42 to thereby form a horseshoe shape (or U-shape) in plan view. The rear arcuate wall 42 thereby enables the user to locate and position the back of their elbow against the rear wall 42, to provide increased support to the user's elbow and to generally or substantially mimic the assistance or support that may be provided by a person supporting a person by their elbow.

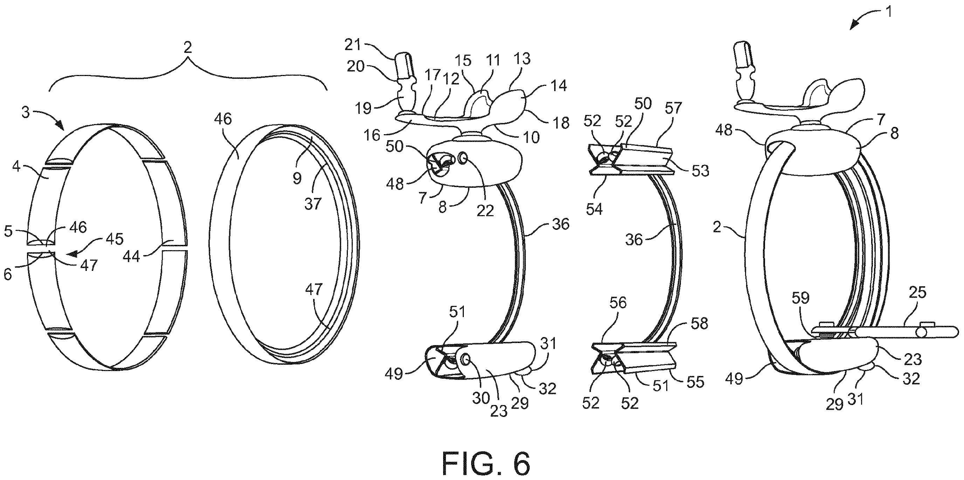

An exploded view, with partial cutaway section views, of the personal mobility aid 1 of Fig. 1 is shown in Fig. 6. Again, the personal mobility aid of Fig. 1 is the same as that of Fig. 2, apart from, schematically, the segments 4 are drawn slightly differently such that there are fewer, but correspondingly longer, segments arranged around the entire circumference of the ground-engageable wheel 2 and the wheel folding mechanism of Fig. 2 is not shown in Fig. 1.

The leftmost image shows the plurality of circumferentially spaced segments 4 which form the tread of the ground-engageable wheel 2. Each of the segments 4 are spaced so that a small gap 44 exists between them and each segment 4 comprises a rearward (i.e. trailing) chamfered edge 6 and a forward (i.e. leading) chamfered edge 5 on an opposing side of the segment 4. These chamfered edges 5, 6 form a step-engagement portion 45 for receiving a step, the step-engagement portion 45 comprising angled surfaces 46, 47. As such the angled surfaces 46, 47 may be angled such that the leading surface, surface 46, is generally horizontal when the wheel 2 is positioned such that that surface 46 or edge 5 is approximately the height of a step above the ground (for example, when the surface 46 or edge 5 is about between 10cm to 30cm above the ground). Similarly, the trailing surface 47 may be angled such that it is generally vertical when the wheel 2 is positioned such that the surface 47 or edge 6 is approximately the height of a step above the ground (for example, when the surface 47 or edge 6 is about between 10cm to 30cm above the ground). As such, the step-engagement portion 45 enables the aid 1 to be rolled up to a step, or other such similarly shaped obstruction, such that the step-engagement portion 45 engages the step and the edge of the step is received in the gap 44 of the step-engagement portion 45. Thus, the aid 1 can then be levered up onto the step by the user pushing the aid 1 (i.e. providing a generally horizontal force in the forward direction), rather than having to lift the aid 1 over the step as they might otherwise have to do with traditional mobility aids. Although in the example shown, the step-engagement portion 45 comprises chamfered edges 5, 6 and angled surfaces 46, 47, the step-engagement portion 45 may comprise any other such suitable shape or configuration for receiving a step. For example, the edges 5, 6 may be rounded rather than chamfered to form arcuate surfaces 46, 47, or may comprise features, e.g. protrusions, for more securely engaging with the step by, for example, increasing friction between the surfaces 46, 47 and the step.

In the next image of Fig. 6, the rim 9 of the wheel 2 is shown. The outer surface 46 of the rim 9 is that to which the tread 3, including segments 4, is affixed and about which the segments 4 are circumferentially spaced. The rim includes a rail 47, or annular ring, for guiding the upper 7 and lower 23 carriages circumferentially around the wheel.

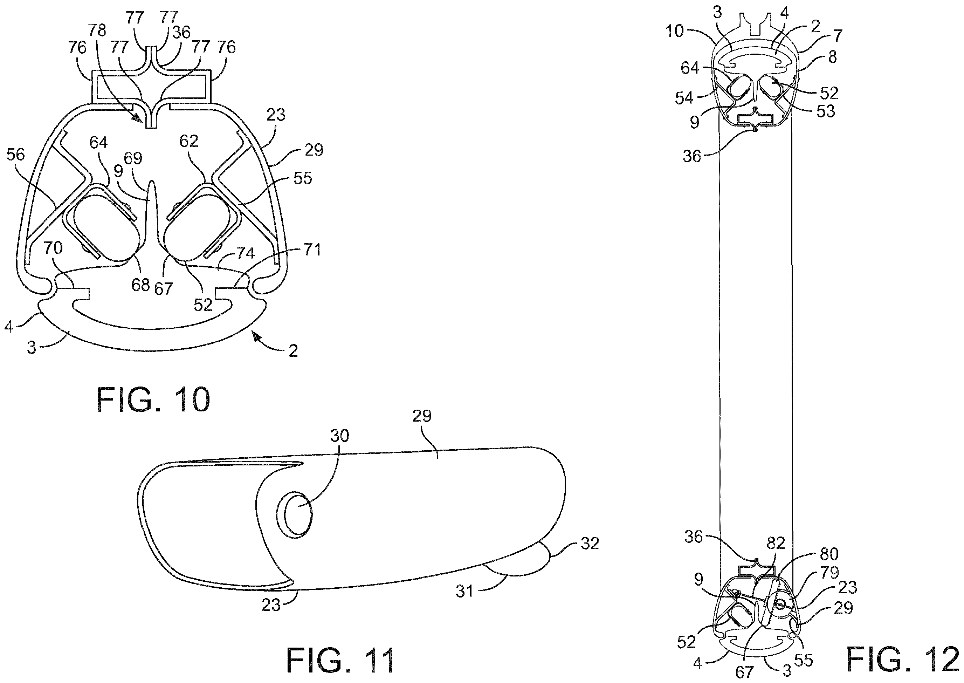

The image in the centre of Fig. 6 is a perspective view of the aid 1, with the ground engageable wheel 2 omitted for ease of inspection. The upper carriage housing 8 comprises an aperture 48 at the front of the housing 8 for receiving the ground-engageable wheel 2 and for allowing the housing 8 to encompass the ground-engageable wheel 2. A similar aperture, which cannot be seen in this view, is provided at the rear of the upper carriage housing 8 for allowing the ground engageable wheel 2 to pass out of the back of the housing 8. Similarly, the lower carriage housing 29, also comprises an aperture for receiving the ground-engageable wheel 2 and for allowing the housing 8 to encompass the rail 47 of the ground-engageable wheel 2. The aperture 49 provided on the front of the lower carriage housing 29 is shown in Fig. 11, with headlights 30. Thus, the ground-engageable wheel 2 extends through the middle of the upper 8 and lower 29 carriage housings.

As can be seen through the front apertures 48, 49 of the upper 8 and lower 29 carriage housings, the upper carriage 7 and lower carriage 23 both comprise wheel-engagement means or rail engagement means 50, 51 configured to engage opposing sides of the circumferential rail and to enable the respective carriages to rotate circumferentially around the wheel. The wheel-engagement means 50, 51 are configured to locate the ground-engageable wheel 2 relative to the carriages 7, 23 to allow rotational movement, but to generally or substantially restrict or limit lateral movement of the carriages 7, 8 out of the plane of rotation, plane C, of the ground-engageable wheel 2. As such, the wheel-engagement means 50, 51 is configured to engage an inner circumferential surface 37 of the rim 9 of the ground engageable wheel 2. To this end, the wheel-engagement means 50, 51 each comprise a plurality of wheels 52 configured to engage opposing surfaces of the rim 9.

An arcuate support bar 36 is affixed to both the upper 7 and lower 23 carriages to maintain a substantially fixed circumferential spacing between them about the ground-engageable wheel 2.

In the penultimate image of Fig. 6, the upper and lower carriage housings have been omitted to show the configuration of the wheel-engagement means 50, 51. Each wheel engagement means 50, 51 comprises a frame 57, 58 to which the wheels 52 on each side are mounted. In some examples, the wheels 52 are rotatably mounted, i.e. pivotably mounted, to their respective frame 57, 58. Each frame 57, 58 comprises a left member or beam 53, 55 and a right member or beam 54, 56 to which the wheels 52 are mounted.

In the last image of Fig. 6, that is the rightmost image, a ground-engageable wheel 2 is shown in ghost, mounted to the aid 1, that it is received by both the upper 7 and lower 23 carriages and passes through the apertures 48, 49 of the upper 8 and lower 29 carriage housings respectively. The stabilising arm 25 is also shown attached to the lower carriage 23, with the stabilising wheel 24 omitted. In this view, the spring 59 of the suspension mechanism between the stabilising arm 25 and the lower carriage 23 can be seen.

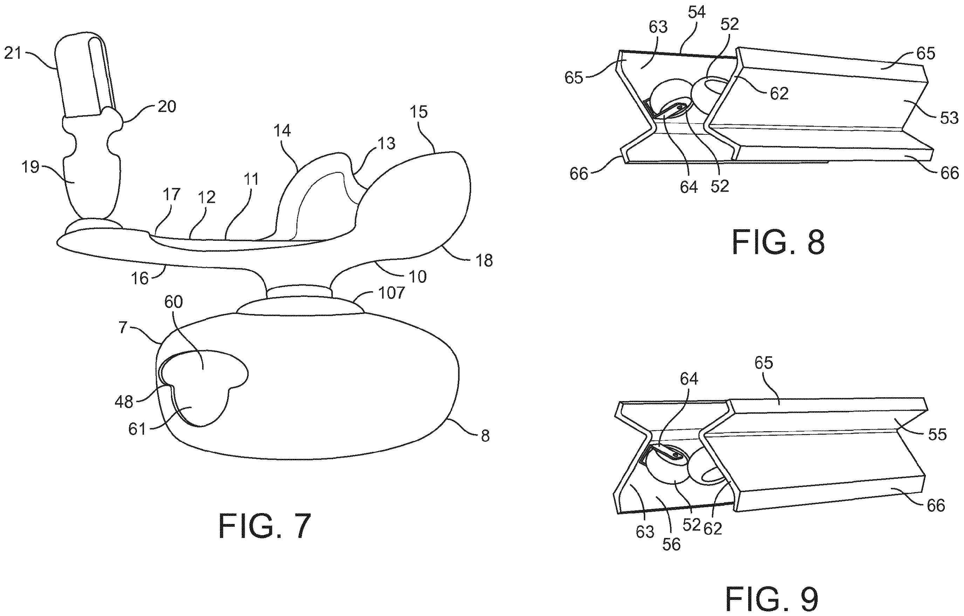

The upper carriage 7 and user support means 10 are shown in Fig. 7. The aperture 48 in the front of the upper carriage housing 48 for receiving the ground-engageable wheel 2 is generally T-shaped, or mushroom-shaped, comprising a wider upper portion 60 for receiving the widest portion of the ground-engageable wheel 2 at its outer surface, including tread 3, and a narrower lower portion 61 for receiving the rail 47 and the rim 9 of the remainder of the ground-engageable wheel 2. A similarly shaped aperture, which may be substantially identically shaped, is provided in the rear of the upper carriage housing 8.

Fig. 8 shows the wheel engagement means 50 of the upper carriage 7. As can be seen, the left member 53 and right member 54 are substantially similar in that they substantially mirror each other about the plane of rotation of the ground-engageable wheel 2, plane C (Fig. 3), and generally oppose each other (i.e. they are arranged in opposition). The wheels 52 of the left member 53 and of the right member 54 are angled with respect to each other. In the example shown, the axes of rotation of the wheels 52 intersect at a point which is radially external to the circumference of the ground-engageable wheel 2. In other examples, the wheels 52 of each frame 53, 54 may be arranged such that their axes of rotation intersect at a point which is radially internal to the circumference of the ground-engageable wheel 2. When the wheels 52 of opposing sides are angled with respect to each other, it enables the carriages 7, 23 to transmit both lateral and radial forces to the ground-engageable wheel 2. As such, the left member 53 and right member 54 include an angled surface 62, 63 to which the wheels 52 are mounted. Each frame 53, 54 comprises a plurality of wheels 52 mounted thereto along their length, although these are obstructed from view in Fig. 8 by the left member 53. Each of the wheels 52 is mounted to its respective frame 53, 54 by brackets 64 to which the wheels 52 are rotatably attached. The brackets 64 may be rotatably attached, e.g. pivotably attached, to their respective frame 53, 54. Upper 65 and lower flanges 66 are provided on each frame 53, 54 for attaching the upper carriage housing 8 thereto.

As can be seen in Fig. 9, the lower carriage frame 58 is substantially similar to the upper carriage frame 57 but is positioned on a lower portion of the ground-engageable wheel 2 and is therefore "upside-down" compared to the upper carriage frame 57. The left member 55 and right member 56 are substantially similar in that they substantially mirror each other about the plane of rotation of the ground-engageable wheel 2, plane C (Fig. 3), and generally oppose each other (i.e. they are arranged in opposition). The wheels 52 of the left member 55 and of the right member 56 are angled with respect to each other. In the example shown, the axes of rotation of the wheels 52 intersect at a point which is radially external to the circumference of the ground-engageable wheel 2. In other examples, the wheels 52 of each frame 55, 56 may be arranged such that their axes of rotation intersect at a point which is radially internal to the circumference of the ground-engageable wheel 2. As such, the left member 55 and right member 56 include an angled surface 62, 63 to which the wheels 52 are mounted. Each frame 55, 56 comprises a plurality of wheels 52 mounted thereto along the length of each frame, although these are obstructed from view in Fig. 9 by the left member 55. Each of the wheels 52 is mounted to its respective frame 55, 56 by brackets 64 to which the wheels 52 are rotatably attached. The brackets 64 may be rotatably attached, e.g. pivotably attached, to their respective frame 55, 56. Upper 65 and lower flanges 66 are provided on each frame 55, 56 for attaching the carriage housing 29 thereto.

Fig. 10 shows a cross-sectional view of the lower frame 58 shown in Fig. 9, with the wheels 52 shown engaging the rim 9 of the ground-engageable wheel 2. The lower carriage housing 29 is shown affixed to the flanges 65, 66 of the left 55 and right 56 members. The rim 9 comprises two opposing inclined surfaces 67, 68 which are engaged by the wheels 52. A rib, or spine, 69 separates the two inclined surfaces 67, 68 and adds further stiffness to the ground-engageable wheel 2. Although shown in Fig. 10 as being generally flat, the opposed surfaces 67, 68 may be arcuate, e.g. concave, and form a generally continuous (e.g. smooth) transition from the rib 69 of the rim 9 to the internal circumferential surface 74 of the rim 9.

The wheel rim 9 comprises a circumferential groove 70, 71 on both its right side and its left side which extends generally horizontally (i.e. laterally) into the rim 9. The tread 3 comprises right 72 and left 73 internal lateral-extending lips which are received by their respective grooves 70, 71 in rim 9. Thus, the tread 3 is affixed to the rim 9.

The arcuate support bar, or arcuate support member, 36 is affixed to the lower carriage housing 29 and comprises two generally identical halves 74, 75, each comprising a generally C-shaped portion 76 with its free-ends flared outwardly to form flanges 77. The two halves 74, 75 are affixed together, e.g. by welding, riveting, adhesive or any such suitable means, along their flanges 77. The C-shaped portions 76 are affixed to the external surface of the lower carriage housing 29 and a slot 78 is provided in the housing 29 to allow the lower pair of flanges 77 to pass through.

Fig. 12 shows a cross section of the mobility aid 1 with the user support means 10 omitted. The cross-sectional view of the components of the upper carriage 7 is the same as that shown in Fig.10 in respect of the lower carriage 23 and so, for conciseness, will not be discussed further here.

The cross-sectional view of the components of the lower carriage 23, however, is different to that shown in Fig. 10 as the cross-sectional view of Fig. 12 is taken through a different plane than that of Fig. 10. The configuration of the lower carriage along this plane is substantially the same as that of Fig. 10, with the exception that, in place of one of the wheels 52, a dynamo 79 is provided on one side of the lower carriage 23. The dynamo 79 is coupled to the ground-engageable wheel 2 by wheel 80 such that rotation of the ground-engageable wheel causes the wheel 80 to rotate, thereby causing shaft 81 of the dynamo 79 to rotate. Thus, the kinetic energy of the ground-engageable wheel 2 may be converted into electrical energy by the dynamo 79. The wheel 80 engages the inclined surface 67 on one side of the wheel rim 9 and is rotatably mounted to the lower carriage by axle 82.

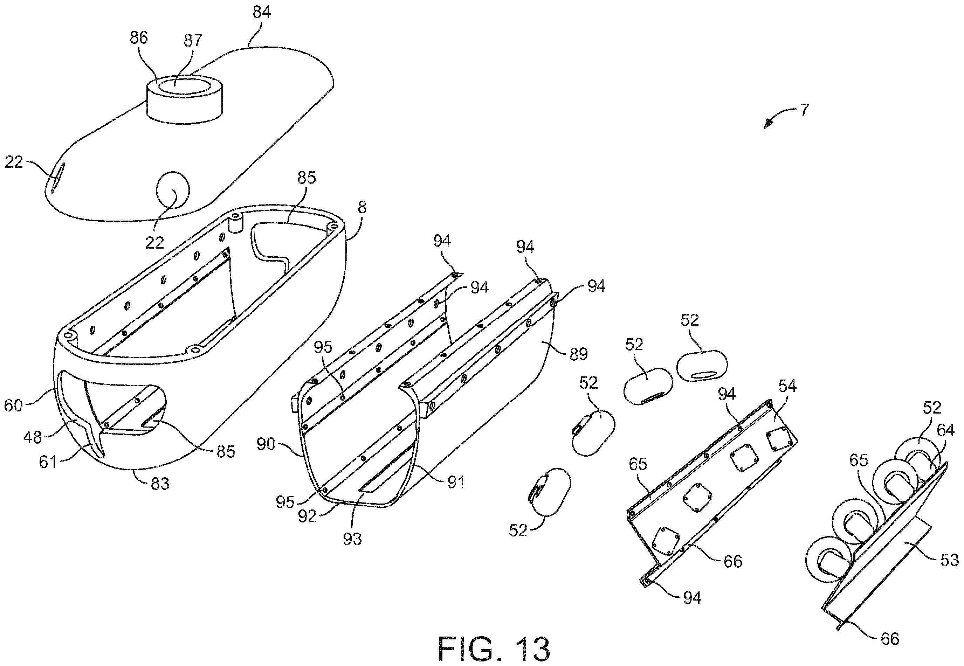

An exploded view of the upper carriage 7 and upper carriage housing 8 is shown in Fig. 13. The upper carriage housing 8 comprises two parts which are securable together: a main body 83 and an upper portion 84. The main body 83 and upper portion 84 may be formed of moulded plastic. The headlights 22 are provided on the front of the upper portion 84. An upper surface of the upper portion 84 comprises a socket 86, comprising a cylinder which extends generally outwards from the upper surface of the upper portion 84 and with an aperture 87 provided in its end face, the socket 86 forming part of the rotatable coupling between the user support means 10 and the upper carriage 7.

The front aperture 48 of the upper housing 8 for receiving the rim 9 of the ground-engageable wheel 2 comprises a T-shape comprising an upper portion 60 and a lower portion 61, the upper portion 60 being substantially wider than the lower portion 61. The width of the upper portion 60 of the aperture 48 generally corresponds to the width of the wheel 9 and tread 3 so that the rim may pass through this portion. Similarly, the width and length of the lower portion 61 generally corresponds to the shape of the rib 69 of the rim 9 such that the lip may pass through it. As such, the aperture 48 generally corresponds to the cross-section of the rim 9 of the ground-engageable wheel 2 but is slightly over-sized in comparison.

An aperture 85 substantially similar to the aperture 48 provided on the front of the upper carriage housing 8 is provided on the rear of the upper carriage housing 8. The rear aperture 75 is for receiving the rim 9 of the ground-engageable wheel 2 to enable the wheel 2 to rotate through the housing 8. The aperture 85 comprises a T-shape comprising an upper portion 60 and a lower portion 61, the upper portion 60 being substantially wider than the lower portion 61.

The main body 83 comprises a longitudinal slot provided on an underside surface for receiving the support bar 36.

In some examples, the upper carriage 7 may also comprise an internal structural liner or frame 89 fixedly mounted to the upper carriage housing 8. The liner 89 is substantially U-shaped, comprising opposing side walls 90, 91 and a lower joining wall, or bridge, 92 joining the two side walls. The side walls 90, 91 of the liner 89 comprise a plurality of holes 94 there-through for receiving a bolt or screw and for fixedly mounting the liner 89 to the upper carriage housing 8. A slot 93, similar to slot 88, is provided in the underside wall 92 for receiving the support bar 36. The support bar 36 may be mounted to the underside joining wall 92.

The wheels 52 on both the left main wheel 2 engagement member 53 and the right main wheel 2 engagement member 54 are arranged along the length of their respective members 53, 54 in an arc or curve which substantially or generally corresponds to the curvature of the rim 9 of the ground-engageable wheel 2 such that the all four wheels 52 on each side 53, 54 follow the same track, or path, as each other along the rim 9. Holes 94 are provided on the upper 65 and lower 66 flanges of the members 53, 54 for mounting the members 53, 54 to the liner 89 and, as such, liner 89 comprises corresponding holes 95.

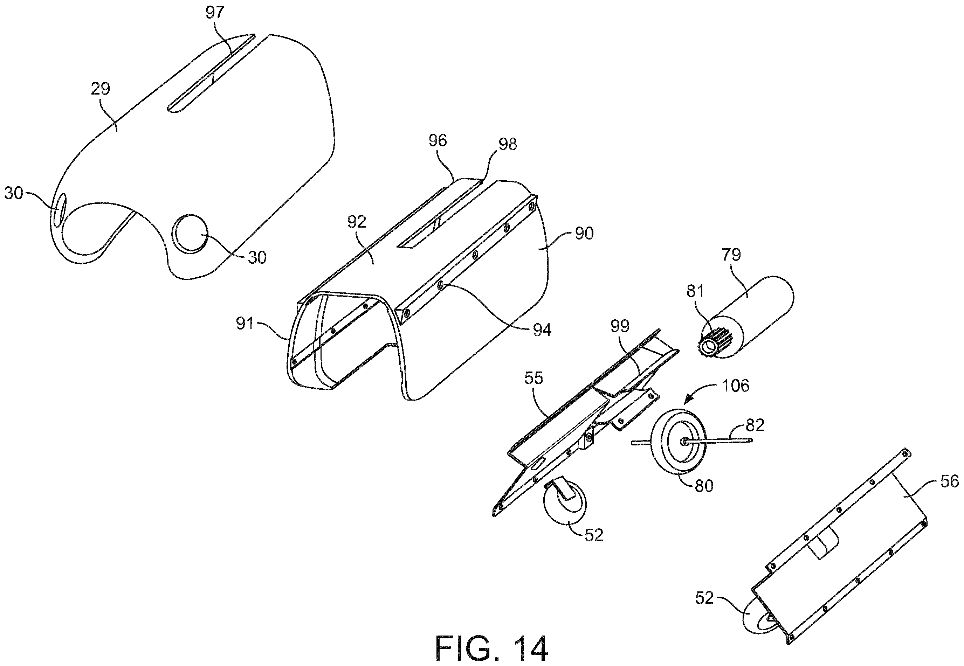

The lower carriage 23 and lower carriage housing 29 is shown in exploded view in Fig. 14. The carriage housing 29 comprises headlights 30 on front external surface thereof and a slot 97 on an upper surface for receiving the support bar 36 for allowing the support bar 36 to pass there-through.

A liner or support frame 96, similar to the liner or support frame 89 is in some examples provided for transferring structural loads from the wheels 52 to the support bar 36.

The liner 96 is substantially an inverted U-shape, comprising opposing side walls 90, 91 and an upper joining wall, or bridge, 92 joining the two side walls. The side walls 90, 91 of the liner 96 comprise a plurality of holes 94 there-through for receiving a bolt or screw and for fixedly mounting the liner 96 to the lower carriage housing 29. A slot 98, similar to the slot 93 of the upper carriage and slot 97 of the lower carriage housing, is provided in the upper wall 92 for receiving the support bar 36. The support bar 36 may be mounted to the upper wall 92.

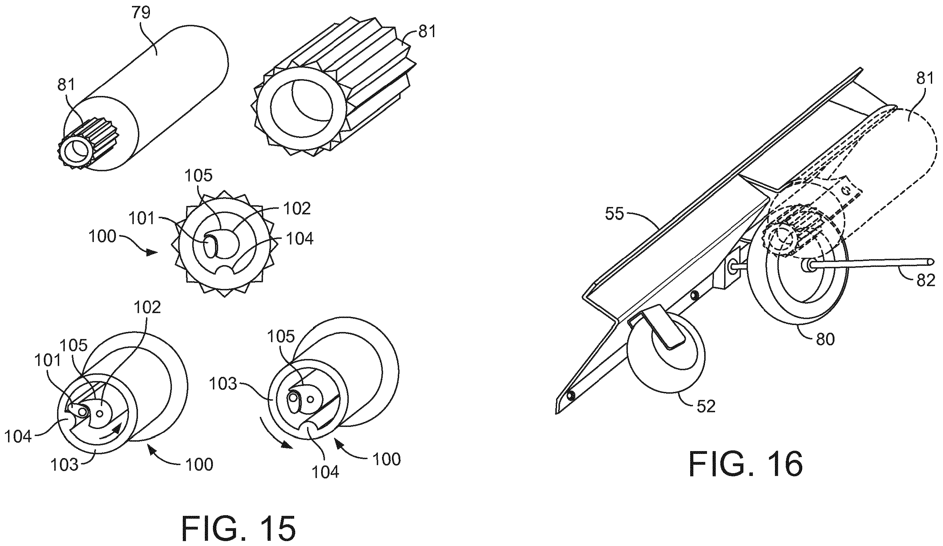

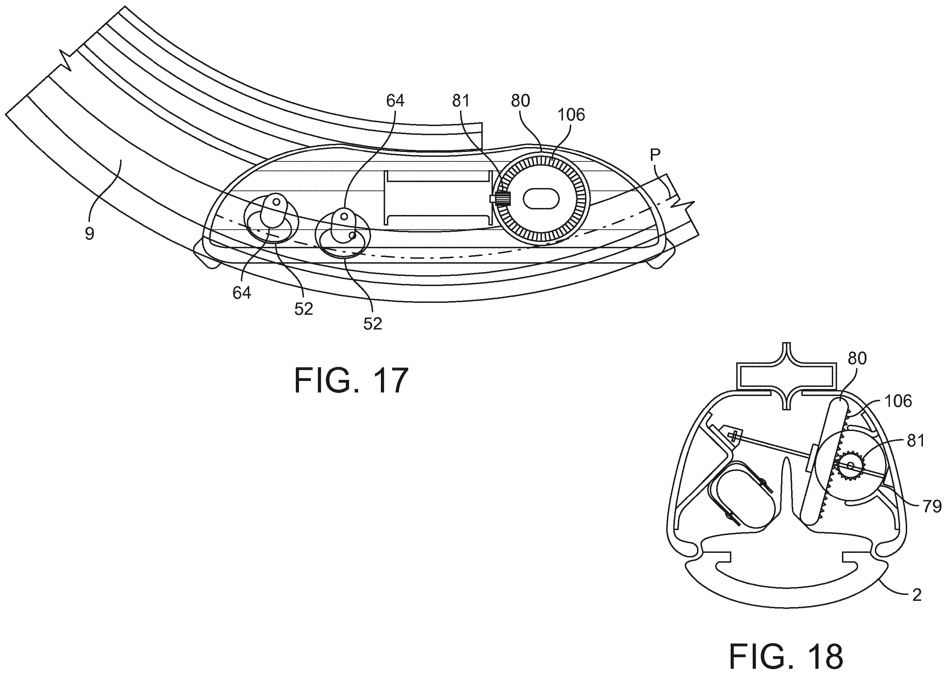

A right side wheel engagement support member 55 comprises a mount 99 for mounting the dynamo 79 thereto which is configured to receive an outer surface of the dynamo 79. The dynamo 79 comprises a geared shaft 81 which engages with a crown gear 106 (see Fig. 18) provided on the right hand surface of wheel 80 (the surface obscured in Fig. 15). Wheel 80 is rotatably attached to the right hand wheel engagement member 56 by axle 82.

The dynamo may be coupled to the wheel 80 by a one-way clutch 100, such as that shown in Fig. 15. The clutch 100 is a sprag clutch. The clutch 100 comprises a cam 101 rotatably coupled to an inner shaft 102, or inner race, and an outer tubular shaft 103, or outer race, comprising an internally extending protrusion 104 for engagement with the cam 101. The shaft 81 comprises the outer race 103. When the inner race 102 is rotated anti-clockwise, as shown in the bottom left view of Fig. 15, the cam 101 engages the internally extending protrusion 104, and rotates outwardly until it engages a lip or shoulder 105 provided on the inner race 102, thereby rotationally coupling the inner 102 and outer 103 races together. When the outer race 103 is rotated in an anticlockwise direction, the protrusion 104 rotates away from the cam 101 and the cam 101 is allowed to disengage from the shoulder 105, and the inner 102 and outer 103 races are thereby rotationally decoupled.

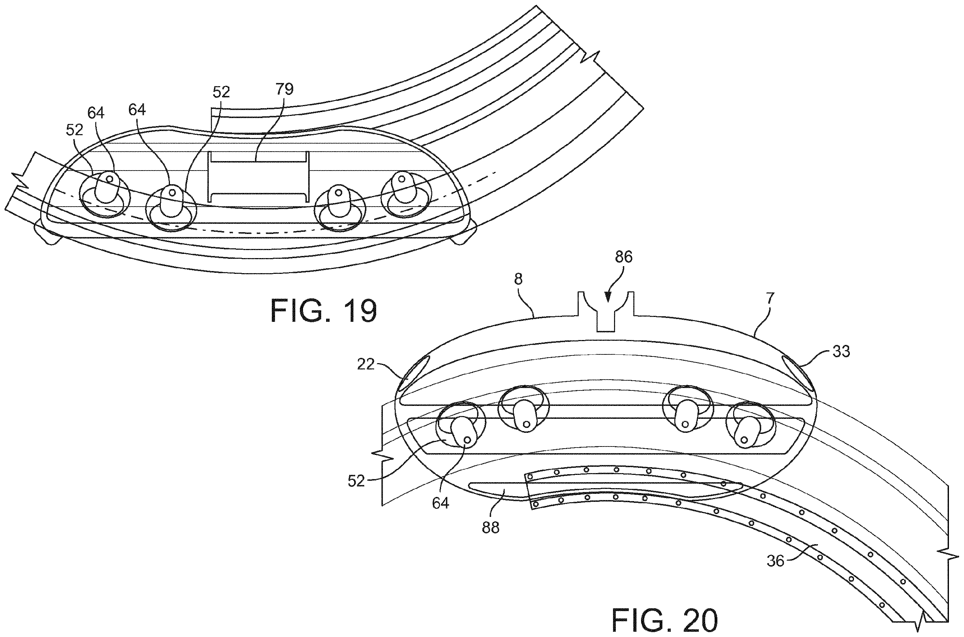

Fig. 17 and Fig. 19 show right and left side cross-sectional views of the lower carriage respectively. In Fig. 17, the crown gear 106 provided on one face of gear 80 which engages the gear teeth provided on the dynamo shaft 81 can be seen. As previously mentioned, wheels 52 are arranged in a curve or arc such that they follow the rim 9 of the main wheel 2 and, as such, all wheels 52 follow the same path along the rim 9, as indicated by path P. Fig. 17 also illustrates an optional feature of the brackets in that they may be rotatably mounted, e.g. pivotably mounted, to the lower carriage by pivotable brackets 64, although in some examples the brackets may be rotationally fixed.

An enlarged cross-sectional view of the lower carriage shown in Fig. 12 is shown in Fig. 18. The view of Fig. 18 is identical to that of Fig. 12, although the crown gear 106 provided on one face of the wheel 80, and the engagement of the crown gear 106 with the geared shaft 81 of the dynamo 79 can be more readily seen. Thus, rotation of the main wheel 2 causes wheel 80 to rotate, which thereby causes the dynamo shaft 81 to rotate.

Fig. 20 is a left side cross-sectional view of the upper carriage 7 and upper carriage housing 8. In this view, both the headlights 22 and taillights 33 can be seen to be provided on the front and rear of the upper carriage housing 8 respectively. The arcuate bar 36 is received by the slot 88 provided in an underside surface of the upper carriage housing 8. A portion of the rotatable coupling comprising socket 86 is provided generally half-way along the length of the upper carriage 7 and upper carriage housing 8.

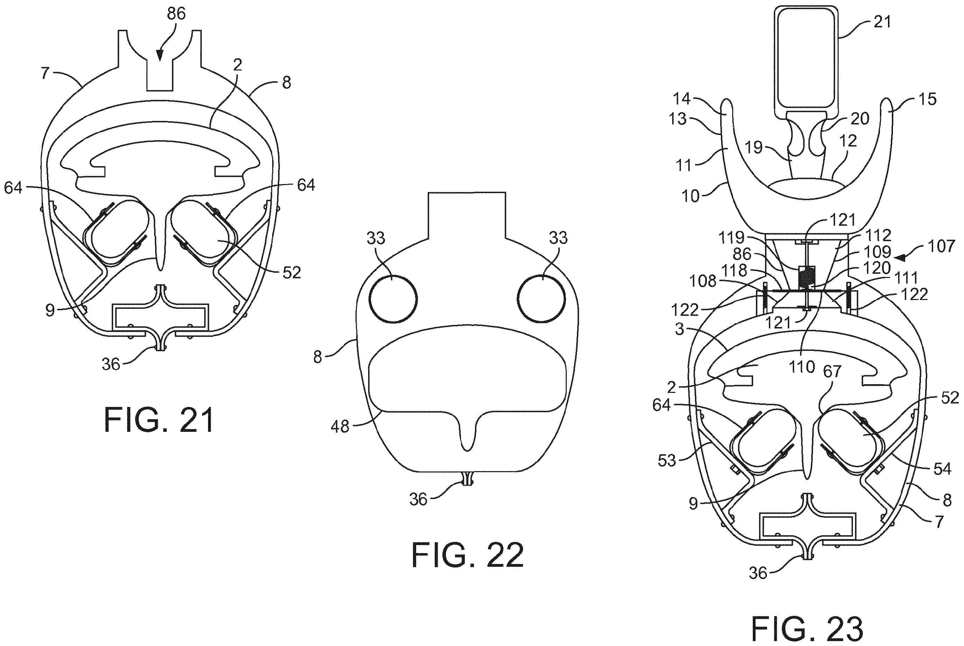

Fig. 21 is an enlarged cross-sectional view of the upper carriage 7 and is identical to that shown in Fig. 12. Fig. 22 is a rear view of the upper carriage housing 8. Taillights 33 are provided on an upper portion of the upper carriage housing 8 and a generally T-shaped rear aperture is provided for enabling the upper carriage housing 8 to encompass the rim 9 of the ground-engageable wheel 2.

An alternative rotatable coupling 107 between the user support means 10 and the upper carriage 7 is shown in Fig. 23. Other than the rotatable coupling 107, all other components of the upper carriage 7 are identical to those shown in the preceding figures.

The rotatable coupling 107 comprises a socket 86 provided in an upper portion of the upper carriage housing 8. The socket 86 extends generally radially with respect to the ground engageable wheel 2 and comprises an aperture 87. Aperture 87 comprises a lower truncated-cone-shaped section 108 and an opposing upper truncated-cone-shaped section 109 which are arranged back-to-back so as to provide a neck or throat 110 of reduced diameter. The interior circumferential surfaces 111, 112 of the lower 109 and upper 108 cones respectively comprise longitudinally extending grooves, extending from the neck 110 to the outer portion of each cone 108, 109.

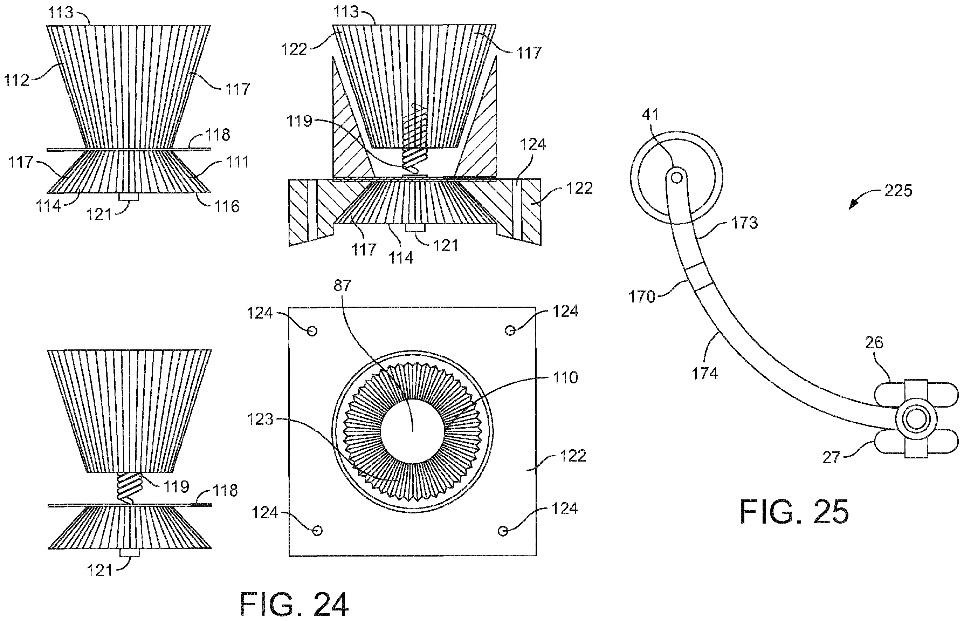

A rotational lock for the user support means or user control means comprises an upper rotational locking member 113 and a lower rotational locking member 114. The upper rotational locking member 113 (see also Fig. 24) is received by the upper-truncated cone-shaped section 109 of aperture 87 and the lower rotational locking member 114 is received in the lower-truncated cone-shaped section 108.

The upper rotational locking member 113 is frustoconical and comprises a truncated cone 115 comprising longitudinally extending teeth 117 on its circumferential surface 112 which are configured to correspond with and engage the longitudinally extending grooves 123 provided on the interior surface of the upper cone interior circumferential surface 112.

Similarly, the lower rotational locking member 114 is frustoconical and comprises a truncated cone 116 comprising longitudinally extending teeth or ridges 117 on its circumferential surface 111 which are configured to correspond with and engage the longitudinally extending grooves 123 provided on the interior surface of the lower cone interior circumferential surface 111. The upper cone 115 and the lower cone 116 are spaced apart by a plate or disc 118 such that the upper cone 115 and the lower cone 116 do not contact each other.

The rotational lock, when engaged, rotationally locks the rotatable coupling 110 such that the user support means 10 and the upper carriage 7 are rotationally locked or coupled together when the rotational lock member is engaged.

As can be seen in the cross-sectional view of Fig. 23, a through-hole extends along the central longitudinal axis of both the upper cone 116 and the lower cone 115. The diameter of the through-hole of the upper cone 116 at its narrowest face (i.e. the lower end) is substantially wider than the remainder of the through-hole so as to form an internal chamber or compartment 120 which extends from this face part-way into the cone 116 and within which a spring 119 is provided. The spring 119 is arranged such that its longitudinal axis is generally aligned with the longitudinal axis of the through-hole. The spring 119 comprises two opposing straight ends, aligned with the central longitudinal axis of the upper 116 and lower cones 115, which extend through the through-hole of the upper 116 and lower cones 115 and which comprise a stop 121 at their ends which engages the flat end surface of the upper 115 and lower 116 cones respectfully. Thus, the spring 119 biases the upper 115 and lower 116 cones towards each other such that they abut against plate 118. The upper 115 and lower 116 cones are thereby sprung to each other and may be separated by applying a longitudinal force to overcome the biasing force providing by the spring 119.

The lower truncated-cone-shaped section 108 is provided in an insert 121.The plate 118 is provided at the neck of the aperture 87 and is held in place by insert 121 which is attached to the upper carriage housing 8 by screws 122. Any other suitable means may be used. An underside plan view of the insert 121 is shown in the right-bottom view of Fig. 24, in which the longitudinally extending grooves 123 provided in the lower cone-shaped section 108 can be seen. The insert 122 is substantially square with holes 124 for the screws 123 are provided at each of the four corners of insert 122.

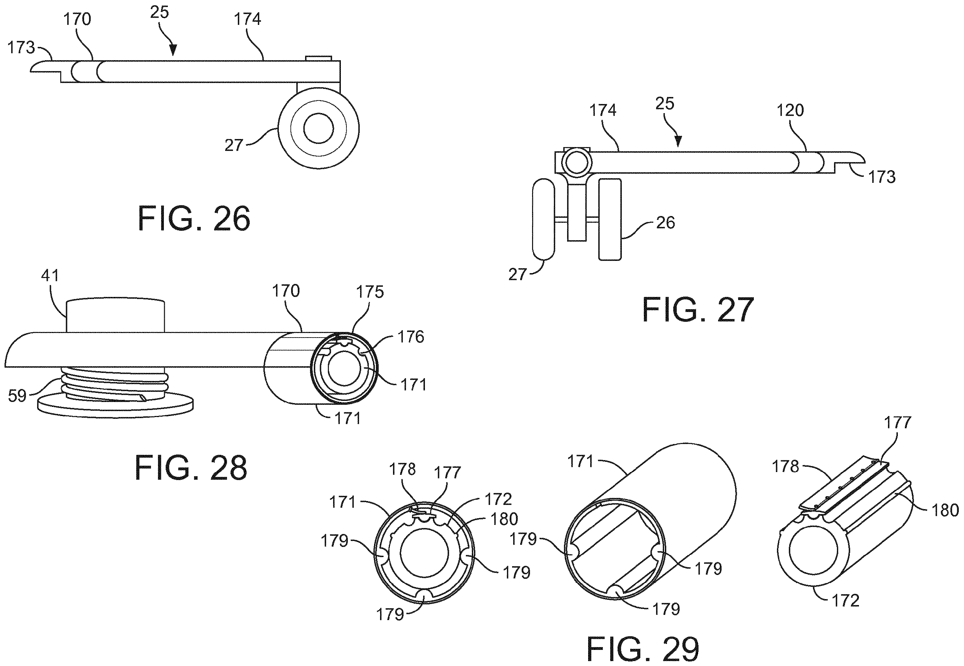

A plan view of an optional rotatable stabilising arm 25 is shown in Fig. 25, with a corresponding side view shown in Fig. 26 and a rear view in Fig. 27. The rotatable stabilising arm 25 comprises a further rotatable coupling 170. The rotatable coupling 170 may be provided part-way along the length of the stabilising arm 25, for example it may be provided closer to the coupling 41 than the wheels 26, 27. The rotatable coupling 170 enables the wheels 26, 27 to pivot vertically such that their height with respect to the ground may be varied. In the example shown, the coupling 170 has pre-determined selectable positions, and is therefore configured such that the wheels 26, 27 are positionable to pre-determined heights with respect to the ground, although other configurations are also envisaged.

As can be seen in the cut-away view of Fig. 28, and as also show in the partially exploded view of Fig. 29, the rotatable coupling 170 comprises an outer tubular housing 171, rotationally fixed to one part 173 of the stabilising arm 25, and a tubular inner member 172, rotationally fixed to another part 174 of the stabilising arm 25. The tubular inner member 172 is rotatable coaxially within the cylindrical outer housing 171 and the arcuate shape of the stabilising arm 25 is such that rotation of the inner member 172 with respect to the outer housing 171 causing wheels 26, 27 to pivot, or rotate, out of plane of the stabilising arm 225, thereby varying the height of the wheels 26, 27 with respect to the ground.

The rotatable coupling 170 comprises locking means 175 configured to lock the rotatable coupling at a rotational position. The locking means 170 shown is configured to lock the rotatable coupling 170 at a plurality of predetermined rotational positions. In the configuration shown, the locking means 170 has three such predetermined positions, although other locking means 175 having any other number of such positions are also envisaged.

To provide the predetermined positions, the inner member 171 comprises a correspondingly-numbered plurality of radially-spaced-apart longitudinal grooves 176 in the outer circumferential surface thereof. A correspondingly-shaped sprung locking tab 177, biased by spring 178, is configured to be biased to engage one of the grooves 176 at a time, and be received by them one at a time, at the corresponding predetermined position to thereby rotationally lock the housing 171 to the inner member 172. Although the locking means locks the coupling 175 in one of the predetermined positions, when sufficient torque is applied across the coupling 175, the biasing force on the locking tab 177 provided by spring 178 is overcome and the locking tab 177 disengages from one groove 176 and slidingly rides along the outer circumferential surface of the inner member 172 until the tab 177 engages the next groove 176, thereby locking the coupling 170 in the next predetermined rotational position.

The inner member 172 is maintained in a coaxial arrangement with the housing 171 by bushes 179 which project from the inner circumferential surface of the outer housing 171 and engage with the outer circumferential surface of the inner member 172. The rotation of the inner member 172 with respect to the outer housing 171 is limited by rotation limiting means, provided in this example as projections 180 which project from the outer circumferential surface of the inner member 172 and which abut against bushes 179 at either extreme rotational position, thereby preventing further rotation, although other configurations of rotation limiting means are equally envisaged.

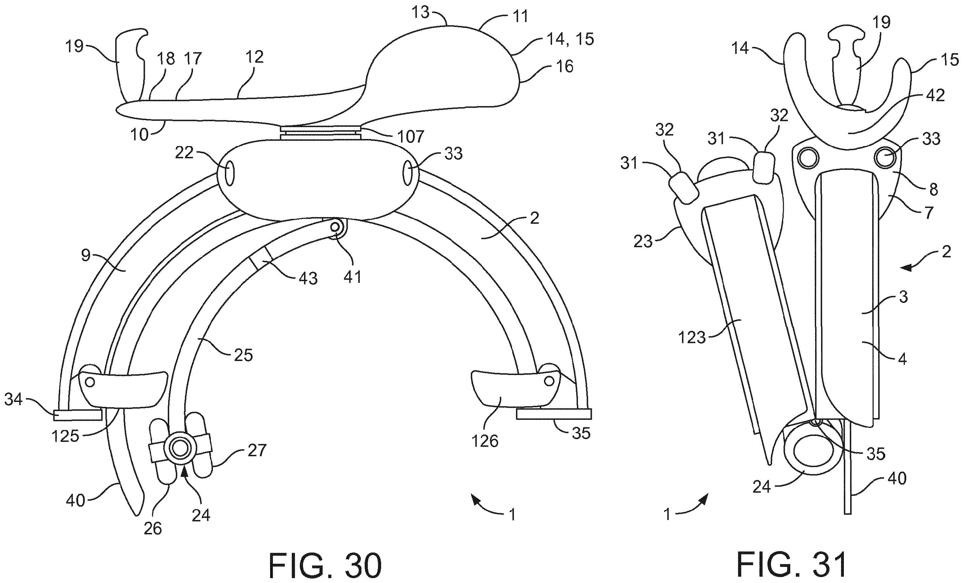

In some examples, the mobility aid 1 may be foldable to improve portability and reduce the overall size of the aid 1. An example of such a mobility aid is shown in Fig. 30. This mobility aid is substantially the same as those of the previous figures with the addition that the mobility aid 1 is foldable. As such, the ground-engageable wheel 2 is foldable such that a portion of the wheel 2 may be folded out of the plane of rotation, thereby reducing the height of the wheel 2. In the example shown, the wheel 2 is generally foldable in half. In order to enable the wheel 2 to be folded, the wheel comprises rotatable couplings, which in the example shown are hinges 34, 35, provided on the rim 9 of the wheel. Although in the example of Fig. 30, the hinges are generally diametrically opposed so that the wheel 2 may be folded in half, they may be provided in other locations on the rim 9 such that the wheel may be folded in some other proportion, for example the lower or upper quarter or third of the height of the wheel 2 may be folded. Hinges may alternatively be located on the wheel such that wheel 2 may be folded in radial segments.

The rim 9 comprises fold locks 125, 126 which are configured to lock the two folding portions of the wheel 2 together in the unfolded configuration in order to prevent the two folding portions of the wheel 2 from folding when the locks 125, 126 are engaged. In Fig. 30, the fold locks 1215, 126 are pivotably coupled to the rim 9 of one of the folding portions by pivotable connection 134. In the locked configuration, the arms of the locks 125, 126 engage the rims 9 of both folding portions to prevent the wheel from being folded. In order to fold the wheel 2, the fold locks 125, 126 are pivoted towards the centre of the wheel 2 and away from the rim 9, thereby disengaging one end of the locks from the rim 9 of the portion of the wheel to which they are not pivotably coupled. As can be seen in Fig. 31, the lower foldable portion of the wheel 2 may then be folded such that it lies substantially to one side of, or adjacent to, the upper foldable portion of the wheel 2. In Fig. 30, the lower foldable portion has been folded away from the viewer and, as such, lies behind the upper portion and so is obscured from view by the upper portion. The arm 25 of the stabilising wheel 24 is suspended from the lower carriage 23.

In examples where the aid 1 comprises a support member 36, the support member 36 may also comprise a hinge to enable the support member 36 to be folded along with the wheel 2. As such, the hinge of the support member 36 may be aligned with the hinges of the rim 9 such that the support member 36 and the wheel 2 are configured to be foldable along generally the same axis. Where a support member 36 is provided, the fold locks 125, 126 may also engage the support member 36 to lock the support member 36 in the unfolded configuration.

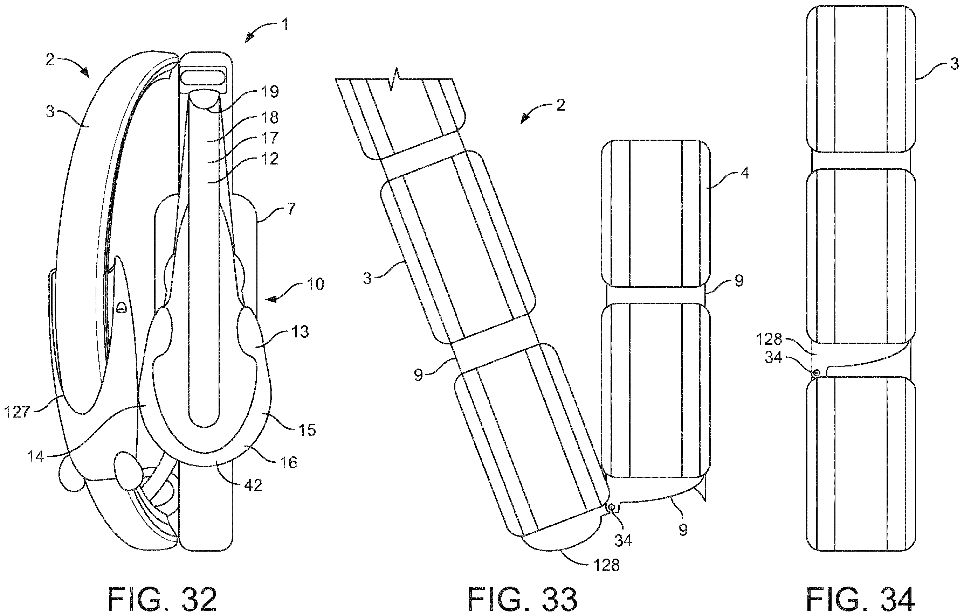

A top plan view of the folded mobility aid of Figs. 30 and 31 is shown in Fig. 32, in which the underside of the lower carriage housing 29 can be seen. In this view, the aperture 127 provided in the underside of the lower carriage housing 29 to enable a portion of the ground-engageable wheel 2 to engage the ground may be seen.

Figs. 33 and 34 show an enlarged front view of the hinge 34 and of the wheel 2 in a folded configuration and in an unfolded configuration respectively. The hinge 34 is provided to one side of the rim 9 (i.e. it is offset from the central plane of rotation of the ground-engageable wheel 2). The rim 9 of the upper folding portion of the wheel 2 comprises an arcuate projection 128 which in the folded configuration overlaps with the rim 9 of the lower folding portion, as shown in Fig. 34.

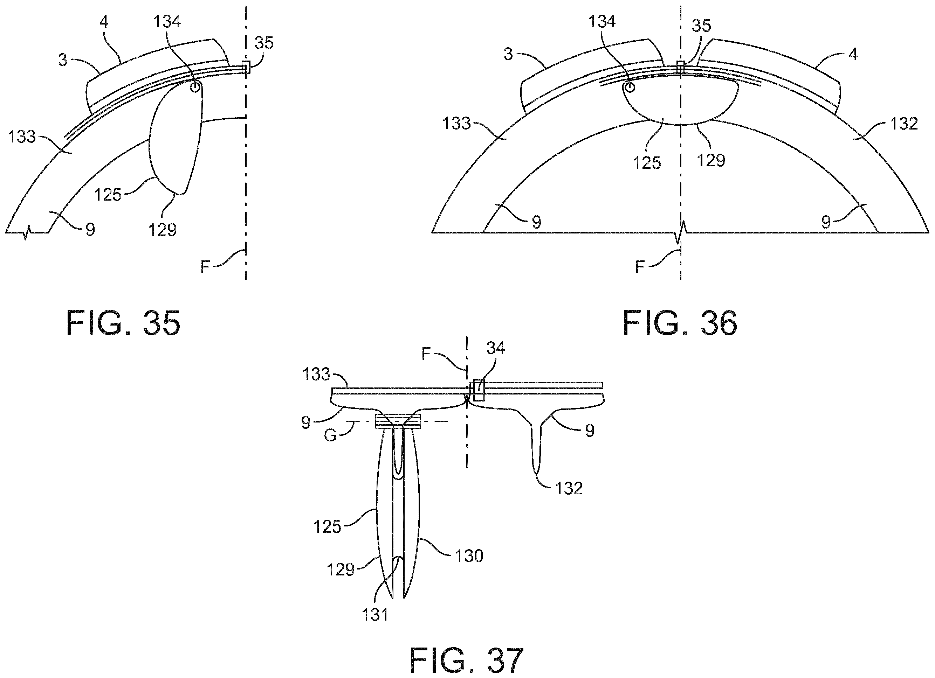

A side view of one of the hinges 34 and locking means, comprising fold lock 125, is provided in Fig. 37. Fold lock 125 comprises two spaced apart arms 125, 130 with a central member 131 there-between. The wheel 2 is shown in the folded configuration with the rim 9 of the upper portion 133 of the foldable wheel 2 shown adjacent (i.e. side-by-side) to the rim of the lower portion 132 of the foldable wheel 2. The lower portion 132 folds about axis F, out of the plane of the figure, until the rim 9 of the lower portion 132 abuts against, and is aligned with, the rim 9 of the upper portion 133. In order to lock the upper portion 133 and the lower portion 132 together, the fold lock 125 is rotated about axis G such that the locking arms engage the rim 9 of the lower portion 132, thereby securing the lower portion 132 to the upper portion 133. The rotation of the lock 125 from the unlocked position in the folded configuration to the locked position in the unfolded configuration is illustrated in Figs. 35 and 36. As the wheel 2 is folded in Fig. 35, the lower portion 132 lies behind the upper portion 133 and, as such, is not visible in Fig. 35.

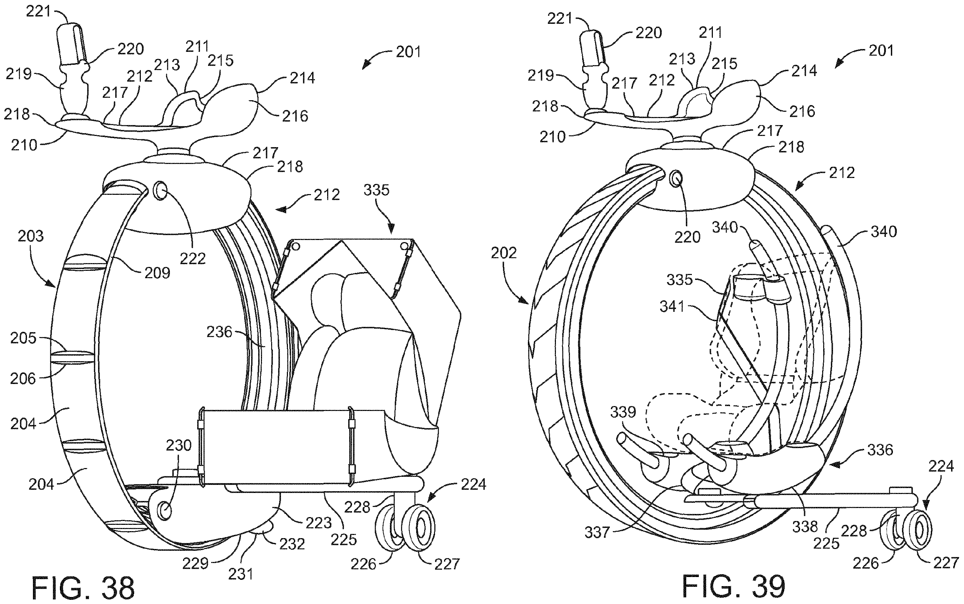

A wheeled child transportation device 201 according to a preferred embodiment of the present invention is shown in perspective view Fig. 38. The wheeled child transportation device 201 consists of the personal mobility aid 1 but is additionally provided with a means for carrying a child or with a means for enabling means for carrying a child to be mounted, e.g. detachably mounted or permanently mounted, to the device. As such, the device may comprise a mount for mounting child carrying means, such as a child seat, e.g. a child car seat, or cot, to the device. Parts of the child transportation device 201 that are used in the mobility aid 1 are assigned similar reference numerals but are increased by 200, thus reference numeral 202 refers to the ground-engageable wheel of the child transportation device 201 and is the same as the ground-engageable wheel 2 of the personal mobility aid 1.

In the example of Fig. 38, a child seat 335 is mounted to the stabilising arm 225 via a child seat mount 336 provided on the arm 225 (not visible in the view of Fig. 38) of the child transportation device 201. The mount 336 is configured to enable a child seat 335 to be detachably attachable to the device, specifically to the arm 225. Thus, the child seat 335 is provided offset from, i.e. generally or substantially to one side of, the child transportation device 201, specifically from the plane of rotation of the ground-engageable wheel 202, providing a "sidecar"-like arrangement.

A similar child transportation device is shown in schematic in Fig. 39, showing an alternative child seat mount 336 mounted to the stabilising arm 225. In Fig. 39, certain parts, for example the lower carriage 223, for illustration purposes, are not shown. The child seat mount 336 of Fig. 39 is a "universal" child car seat mount in that it is configured to receive a variety of differently-sized and differently-configured child car seats so that a parent may use their existing child car seat with the device, thereby improving the convenience of the device 201 as, for example, a parent may transfer their existing child car seat directly from a car and mount it to the child transportation device 201. The child seat 336 in Fig. 39 is shown in ghost.

As can be seen from Fig. 39, the car seat mount 236 is provided on the stabilising arm 225 such that the child seat 335 is provided closer to the plane of rotation of the ground-engageable wheel 202 than in the example of Fig. 38. In the example of Fig. 38, the child seat 335 is entirely to one side of the ground engageable wheel 202 whereas, in Fig. 39, a portion of the child seat 335 and mount 336 extend within the annular space provided within the centreless ground-engageable wheel 202. Examples wherein a child seat is mounted or mountable to the device such that it is provided substantially in the centre of the ground-engageable wheel 202 are also envisaged (i.e. a centreline of the child seat 336 is generally or substantially aligned with the plane of rotation of the ground engageable wheel 202).

The car seat mount 336 of Fig. 39 comprises a central member 337, via which the child seat mount 336 is mounted to the stabilising arm 225, and left 338 and right 339 child seat side members attached to respective sides of the central member 337. Each side member 338, 339 comprises an upwardly extending arcuate bar or rail 340 for securing the child seat 335, especially an upper portion thereof, to the child seat mount 336. The arcuate bars 340 extend entirely through their respective side member 338, 339 such that a portion of the arcuate bars protrudes from the opposite side of the side members 338, 339. The protruding length of the arcuate bars may be used to further secure the child seat 335 to the child seat mount 336 by, for example, engaging with a front of the child seat 335 and thereby (or otherwise) restrict the longitudinal (i.e. frontward/rearward) movement of the child seat 335.

Child seat securement means may be provided on at least one of the arcuate bars 340 for securing the child seat 335 thereto. In the example of Fig. 39, the child seat securement means comprises a child seat strap 341 for strapping the child seat 335 to the child seat mount 336 via arcuate bars 340. Thus, in order to secure the child seat 335 to the child seat mount 336, the strap 341, which is fixedly attached to one of the bars 340, is passed from the bar to which it is attached, around the car seat and is fixedly attached to other side of the child seat mount 335, for example the arcuate bar 340 or the child seat mount side member 338 on the other side. Thus, the child seat 335 is strapped to the child seat mount 336. The strap 341 may also serve as a child securement means for securing a child to the child seat 335.

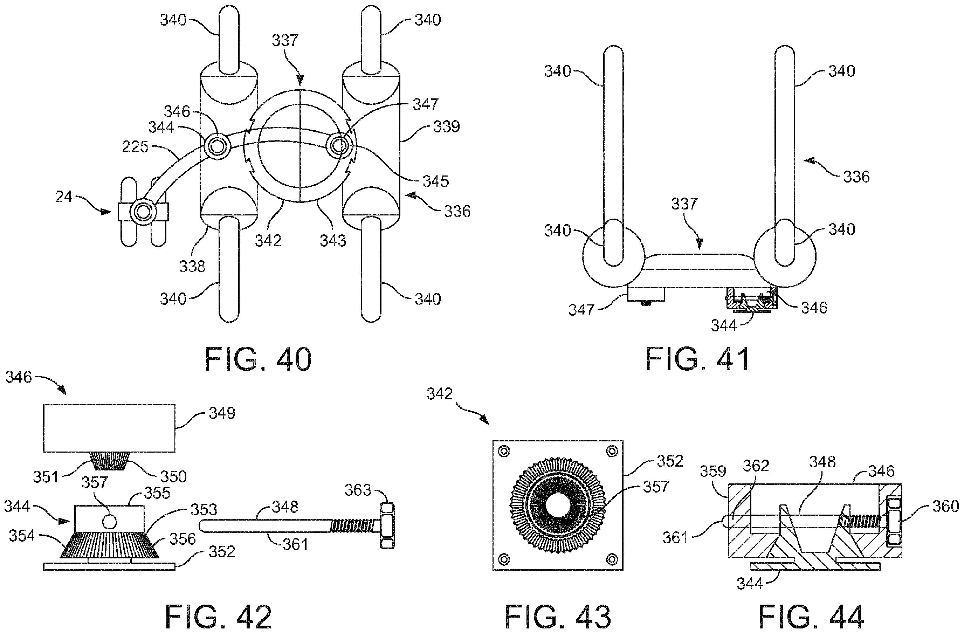

A top plan view of the child seat mount 336 of Fig. 39 is shown in Fig. 40. The stabilising arm 225 is also shown to illustrate the mounting points 344, 345 for mounting the child seat mount 336 to the stabilising arm 225. The car seat mount 336 is shown "transparent" such that the mounting points 344, 345 and a portion of the stabilising arm 225, which are underneath the child seat mount 336 and therefore would otherwise not be visible, can be seen.

The central member 337 is expandable, e.g. telescopingly expandable, in a side-ways, or lateral, direction such that the two side members 338, 339 may be selectively spaced apart from each other in an expanded configuration. As such, the central member 337 comprises two halves: a left half 342 and a right half 343. The child seat mount 336 is shown in a collapsed or unexpanded configuration in Fig. 40 and, as such, the two opposing halves 342, 343 of the central member 337 are not spaced apart (as they would be in the expanded configuration) but are instead collapsed together.

The stabilising arm 225 is provided with two mounting points 344, 345. One mounting point, the right mounting point 345, is provided at one end of the stabilising arm 225 while the other mounting point, the left mounting point 344, is provided part way along the length of the stabilising arm 225. Mounting points 346, 347, not visible in Fig. 40, for engaging with the mounting points 344, 345 of the stabilising arm 225 are provided on an underside of the central member 337 of the child seat mount 335; one mounting point 346 is provided on the left half of the child seat mount 335 and the other mounting point 347 is provided on the right half of the child seat mount 335.

In Fig. 40, the right mounting point 345 of the stabilising arm 225 is engaged with the mounting point 347 on the right side member 343 of the child seat mount 336, although the left mounting point 344 of the stabilising arm 225 is disengaged with the mounting point 346 on the left side member 342 of the child seat mount 336.

Fig. 41 shows a front view of the child seat mount 336 of Fig. 40, showing the mounting point 346 of the left right side member 342 engaged with the left mounting point 344 of the stabilising arm 225 and the mounting point 347 of the right side member 343 disengaged with its corresponding mounting point, mounting point 345, of the stabilising arm 225.A locking pin 348 couples the two mounting points, mounting points 346 and 342, together to prevent them from disengaging through vertical movement.

The coupling of the mounting points 346 and 342 is shown in cross-section in Fig. 41 and is shown in greater detail in Fig. 42. The mounting point 346 of the left side member 346 is identical to the mounting point 347 of the right side member 346 and, similarly, both mounting points of the stabilising arm 225 are identical.

The side member mounting points 346, 347 comprise a cylindrical block 349 comprising a frustroconical locking member 350 which extends from an underside surface thereof. The frustroconical locking member 350 comprises a plurality of longitudinally extending teeth 351 on its circumferential surface.

The stabilising arm mounting points 342, 343 comprise a mounting plate 352. A locking member 353 is provided on the upper surface of the mounting plate 352. The locking member 353 comprises a frustroconical section 354 and a cylindrical section 355 extending from the upper end, i.e. the narrowest end, of the frustroconical section. The frustroconical section comprises a plurality of longitudinally extending teeth 356 on its circumferential surface. The cylindrical section 355 comprises a conical aperture 357 in its upper surface, as can be seen in the top plan view of the stabilising mounting point 342 shown in Fig. 43 and the cross-sectional view of Fig. 44. The conical aperture 357 is configured to receive the locking member 353 of the stabilising arm mounting point 342 and comprises longitudinally extending teeth 358 on its inner circumferential surface configured to engage with the teeth 351 of the locking member 351 of the side member mounting point 346. Thus, when the locking member 351 of the side member mounting point 346 is received by and engaged with the locking member 353 of the stabilising arm mounting point 342, the two are rotationally locked, or coupled, together. Once the two are engaged, a locking pin 348 is inserted such that it passes through a diametrically extending hole provided in both the locking member 351 of the side member mounting point 346 and the locking member 353 of the stabilising arm mounting point 342, thereby preventing the two locking members 351 and 353 from disengaging through vertical separation.

Fig. 43 additionally shows holes provided at each corner of the square mounting plate 352 for receiving screws or bolts for affixing the mounting point 342 to the stabilising arm 225.

The engagement of the locking pin 348 with the aperture 357 of the locking member 353 of the stabilising arm 225 and the aperture (not visible in Fig. 42) of the locking member 350 of the child seat mounting point 346 can be seen in the cross-sectional view of Fig. 44. As can also be seen in Fig. 44, the mounting point 346 comprises a circumferential recess configured to receive the cylindrical portion 355 of mounting point 346, such that when the upper mounting point 346 and the lower mounting point 342 are engaged, the cylindrical portion 355 is entirely within the circumferential recess provided around the frustroconical locking member 350.

The child seat mounting point 346 is provided within housing 359, the housing 359 comprising a diametric through-hole 362 for receiving the locking pin 348, the through-hole 362 being aligned with the hole 357 of the stabilising arm mounting point 344 and of the hole of the locking member 350. The housing 359 further comprises a recess for receiving the head 363 of the locking pin 348 such that the head 363 of the locking pin 348 is recessed within the housing 359 when the locking pin 348 is fully inserted.

The housing 359 further comprises an aperture 364 on its underside surface which is frustroconical in shape so as to receive and engage with the frustroconical locking member 353 of the stabilising arm mounting point 344. The aperture 364 comprises longitudinally extending teeth on its inner circumferential surface configured to correspond and to engage with the teeth of the locking member 353 to rotationally couple the mounting point 344 to the housing 359.

The locking pin 348 comprises a shaft 361 with a head 360 at a distal end thereof. The shaft 361 comprises a male thread partway along its length such that the thread engages with a female thread provided in the aperture 357 of the locking member 342. Thus, once the locking pin 360 is inserted partway into aperture 357 and through the aperture of locking member 350, it is then rotated to screw the locking pin 348 in order to fully insert the locking pin 348 into the aperture 357.

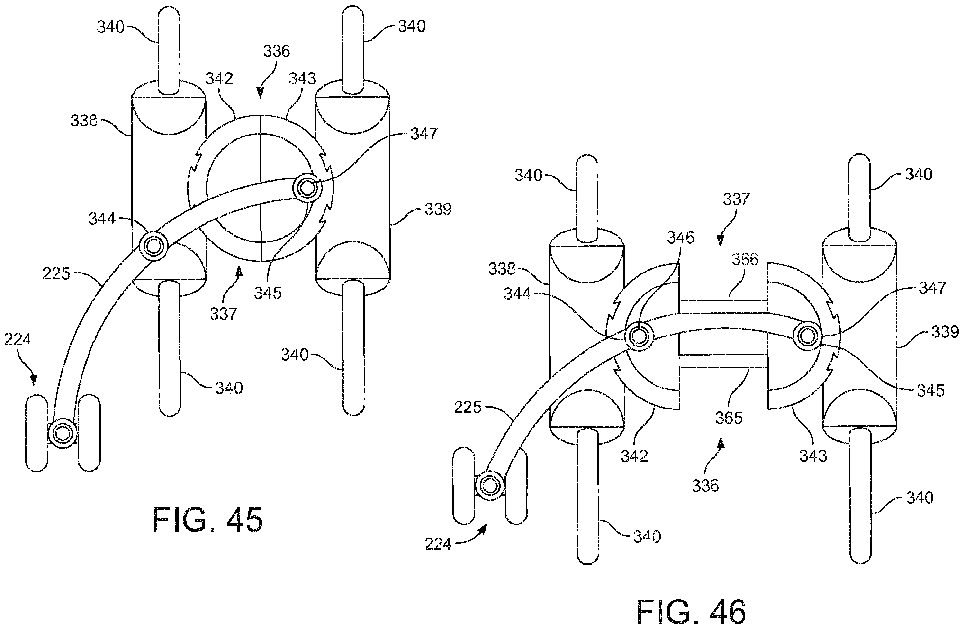

The collapsed and expanded configurations of the child seat mount 336 are shown in Figs. 45 and 46 respectively. In the collapsed configuration of Fig. 45, the left half 342 and the right half 343 of the child seat mount 336 are positioned next to each other such that they abut, the two semi-circles of the left 342 and right 343 halves forming a continuous circle in profile. The stabilising arm 225 is affixed via mounting points 347 and 345 to the underside of the right half 343 of the child seat mount 336. Mounting point 344 of the stabilising arm 225 is disconnected from the mounting point 346 of the left half 342 of the child seat mount 336. In some examples, the left 338 or right 339 side member may comprise an additional mounting point for receiving a mounting point 344, 345 of the arcuate stabilising arm 225 for affixing the stabilising arm to a side member in the collapsed configuration. The arcuate stabilising arm is arranged such that the stabilising wheel is 224 trails the ground-engageable wheel 202 and so is provided such that the point of contact of the stabilising wheel 224 with the ground 367 is behind (i.e. more rearward in the direction of travel of the device 201) the point of contact of the ground-engageable wheel 202 with the ground 367.

Turning now to Fig. 46, in the expanded configuration, the left 342 and right 343 halves of the central member 337 of the child seat mount 336 are spaced apart from each other by telescopingly extendable rods 365, 366 integrally formed within the central member 337, each rod 365, 366 comprising a plurality of telescopingly expandable tubular sections consecutively slidingly arranged within each other, although other forms of extendable rods may be used, and equally other suitable means for spacing apart the left 342 and right 343 halves may be used. One expandable rod 366 is provided more forward (i.e. in the direction of travel of the device 201) than the other 365, the two rods being spaced apart. Spacing apart of the rods 366, 365 provides a child seat mount with greater stiffness than if the rods 366, 365 were not spaced apart.

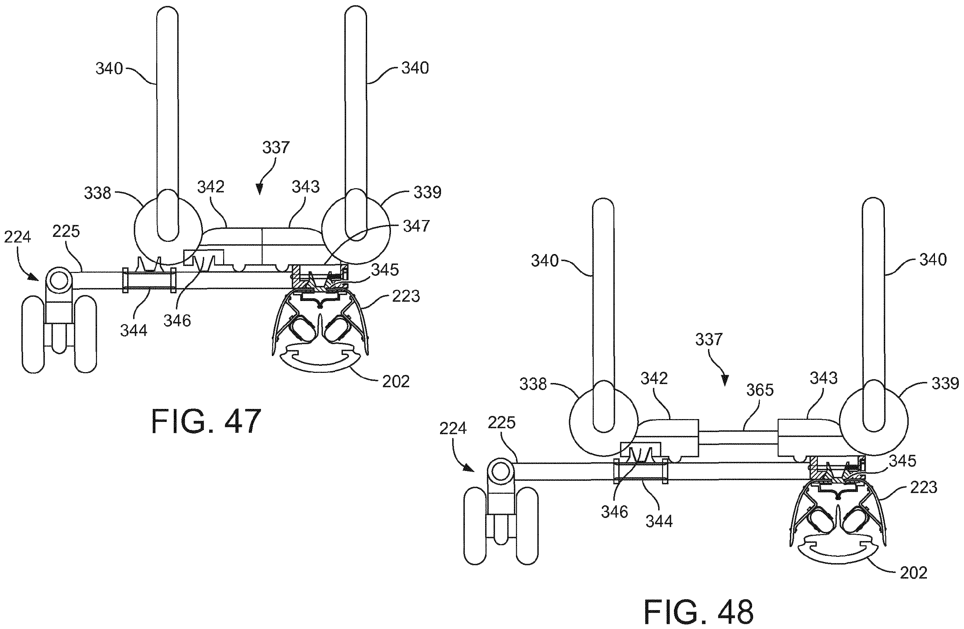

Rear views of the collapsed and expanded configurations of Figs. 45 and 46 are shown in Figs. 47 and 48 respectively. A partial cross-sectional view of the lower carriage 223 and ground engageable wheel 202 are also shown. The disengagement of the left mounting point 346 of the child seat mount 336 and the mounting point 344 of the stabilising arm in the collapsed configuration can be seen in Fig. 47. This can be compared to the engagement of these mounting points 336, 344 in the expanded configuration shown in Fig. 48.

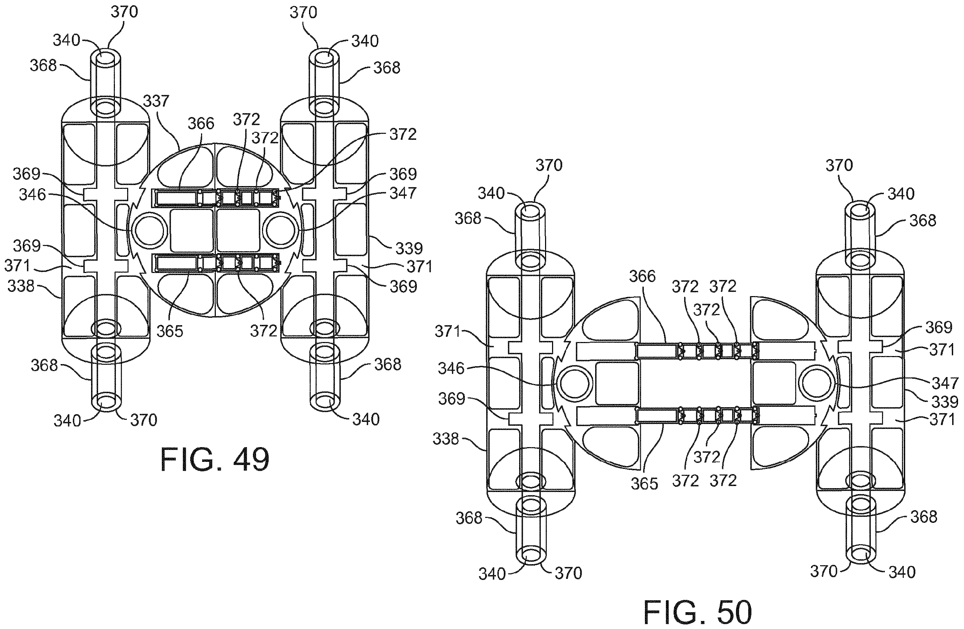

Cross-sectional views of the lower portion of the child seat mount 336 in the collapsed and expanded configurations are shown in Figs. 49 and 50 respectively.

The arcuate arms 340 of the child seat mount 366 comprise a curved or arcuate bar 370, optionally made from metal, forming a core which is optionally covered over the portions of the arms 240 which extend outside of the left 338 and right 339 side members by padding comprising a foam layer or covering 340. Other suitable means of padding may optionally be used.

Each of the arcuate arms 340 comprise two shoulders 369 along their length which engage with correspondingly shaped internal compartments 371 provided within the side members 338, 339, thereby affixing and securing the arcuate arms 340 to the side members 338, 339.

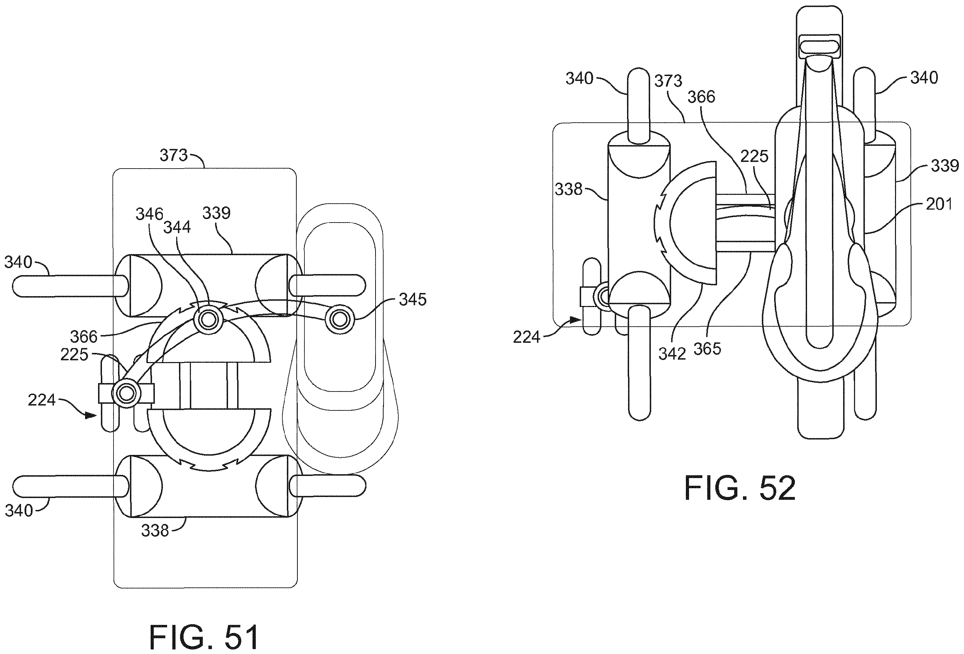

The telescopingly extendable rods 365, 366 comprising locking means to lock the rods in an extended configuration (Fig. 52). The locking means comprises sprung-loaded ball bearings 372 which, when the rods 365, 366 are locked in the extended configuration, engage with corresponding apertures provided in the walls of the rods 365, 366 along their length.

Although the mount 336 has been previously described as a child seat mount, it may also be a mount for mounting other child carrying means. In Figs. 51 and 52, a cot 373 (e.g. a carrycot) is shown mounted to the mount 336. The remainder of the device 201 is shown in ghost. In this configuration, the mount 366 is mounted to the stabilising arm 225 via only one mounting point, mounting point 344, provided part-way along the length of the stabilising arm 225. Mounting point 344 of the stabilising arm 225 is engaged by only one of the mounting points 346 of the child carrying means mount 336. The other mounting point 347 of the child carrying means mount 336 is disconnected from the other mounting point 345 of the stabilising arm 225. The child carrying means mount 336 is arranged generally perpendicularly to the configuration shown in Figs. 45 and 46 for example such that the mount 336 is extendable in a longitudinal direction of the device 201 (i.e. in the direction of travel of the device 201). When the mount 336 is arranged in this way, the cot 373 is mounted to the device 201 such that it length is aligned with the longitudinal direction of the device 201 in order to minimise the overall width of the device 201 and cot 373 .

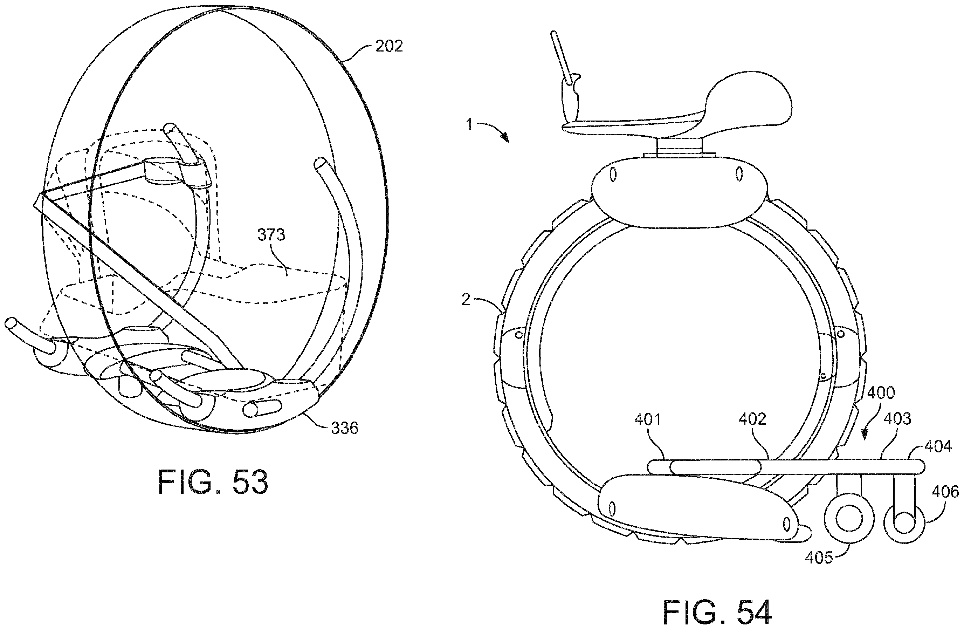

An alternative configuration for mounting a cot 373 to the device 201 is shown in Fig. 52. The child carrying means mount 336 in this configuration is mounted to the stabilising arm 225 in the same way as that shown in Figs 45 and 46 in that both mounting points 345, 346 are engaged by the mount 336. In this arrangement, the cot is mounted to the child carrying means mount 336 laterally so that it a portion thereof extends at least partway through the annular space defined by the centreless ground-engageable wheel 202. A ground-engageable wheel 202 that is centreless is therefore advantageous when mounting a cot 373 laterally in this way as, by a portion of the cot 373 extending through the annular space of the centreless wheel, the overall width of the device can be reduced, thereby improving mobility and handling. A cot 373 mounted laterally to the device in this way is shown in perspective in Fig. 53 (for illustration, only the ground-engageable wheel 202 of the device 201 is shown).

Fig. 54 illustrates a ride-on platform 400 for carrying a person, for example a child. Examples are envisaged which are permanently attached, or are integrated, to a child transportation device or a personal mobility aid 1, such as that of the present invention, and, in such examples, the child transportation device or personal mobility aid 1 comprises the ride-on 400, for example, the ride-on 400 could be detachably attachable or non-detachably attached to the device or aid 1 or could be integrally formed with a component of the device or aid 1 such as the lower carriage 23. The ride-on platform 400 is configured to support a child and enables the child to piggyback on the back of the device or aid 1 such that they may ride along with the device or aid 1, the device or aid 1 being propelled by the user, for example a parent.

In the example shown, the ride-on platform 400 is coupled to, or attached to, the lower carriage by a connector. The connector is similar to, or can be substantially identical to, the mount shown in Figs. 42 to 44, although any suitable connector may be used. The ride-on platform 400 comprises a support member 402 for mounting the platform to the lower carriage 23 such that the support platform 403, configured to support a rider, e.g. a child, in a standing position, is spaced from the lower carriage 23. In the example shown, the support platform 403 is spaced generally or substantially rearward, and to the left side of, the lower carriage, although, in other examples, the support platform 403 may be spaced anywhere with respect to the lower carriage 23, for example to the right or left side, or rearwardly or forwardly in-line with the lower carriage 23 (and thereby to the ground engageable wheel 2).

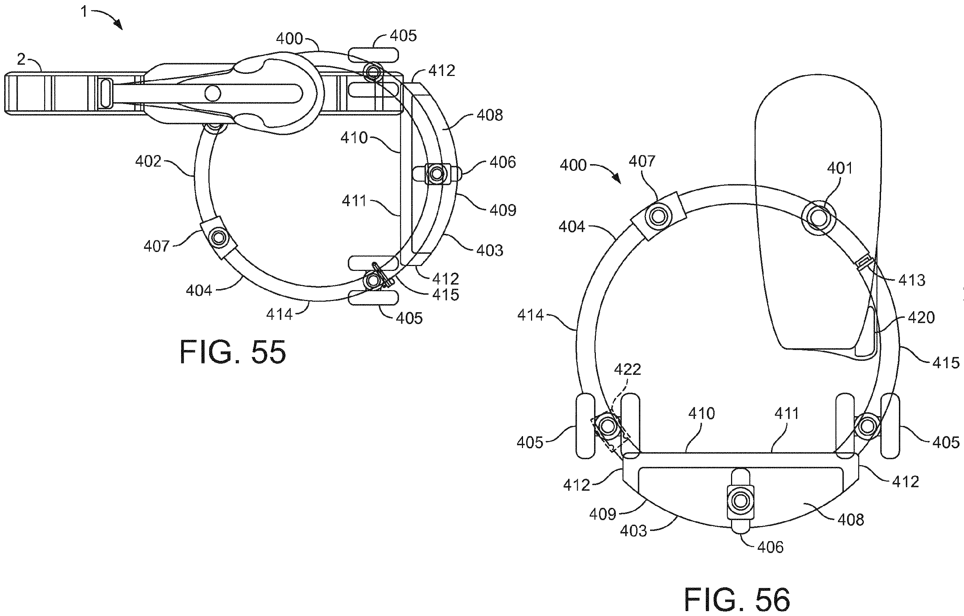

As can be seen in Figs. 55 to 57, the support member 402 comprises a tubular ring 404, although non-tubular rings, or other shapes, could also be used. Two pairs of stabilising wheels 405 are provided on the support member 402, each pair being radially spaced apart from each other with respect to the tubular ring 404. In the example of Figs. 54 to 57, the wheels 405 are provided on one side of the tubular ring 404, that is on the side of the tubular ring 404 towards the support platform 403 such that they are spaced away from and rearward of the lower carriage 23 when the ride-on platform 400 is mounted thereto. Each pair of stabilising wheels 405 are pivotably connected to the support member 402 and may be caster wheels such that the wheels 405 caster according to the direction of travel of the device or aid 1.

The ring 404 comprises a third stabilising wheel 406 spaced between and generally equidistant from the two pairs of stabilising wheels 405. This third stabilising wheel 406 is a single wheel which may also be pivotably connected to the support member 402 and may also be a caster wheel. The third stabilising wheel 406, which may also be referred to as the platform wheel, is arranged generally underneath the centre of the support platform 403 and thus provides support for the support platform 403 as it enables the load from a person standing on the support platform 403 to be transmitted more directly from the support platform 403 to the ground. Thus, the platform wheel 406 reduces the unsupported span of tubular bar between the two pairs of stabilising wheels 404 and thereby reduces deflection of the bar or ring 404 resulting from a person standing on the support platform 403, enabling a lighter construction for the support platform 403 to be used.

The ride-on platform 400 comprises means for receiving a child seat. In the example shown, the support member comprises a child seat mounting point 407 for mounting a child seat mount thereto. The child seat mounting point 407 is provided generally on the opposite side of the ring 404 to which the support platform 403 is provided. The child seat mounting point 407 may be generally or substantially identical to the child seat mounting point described above.

As shown in Figs. 55 to 57, the support platform 403 comprises a generally planar portion 408 having an arcuate rear edge 409 which is concentric with the support member ring 404 and it further comprises an upwardly protruding wall or rib 410 which runs along a front edge 411 and the two side edges 412 of the support platform. The generally planar portion 408 defines an area for standing upon and thus for supporting a person to be carried.

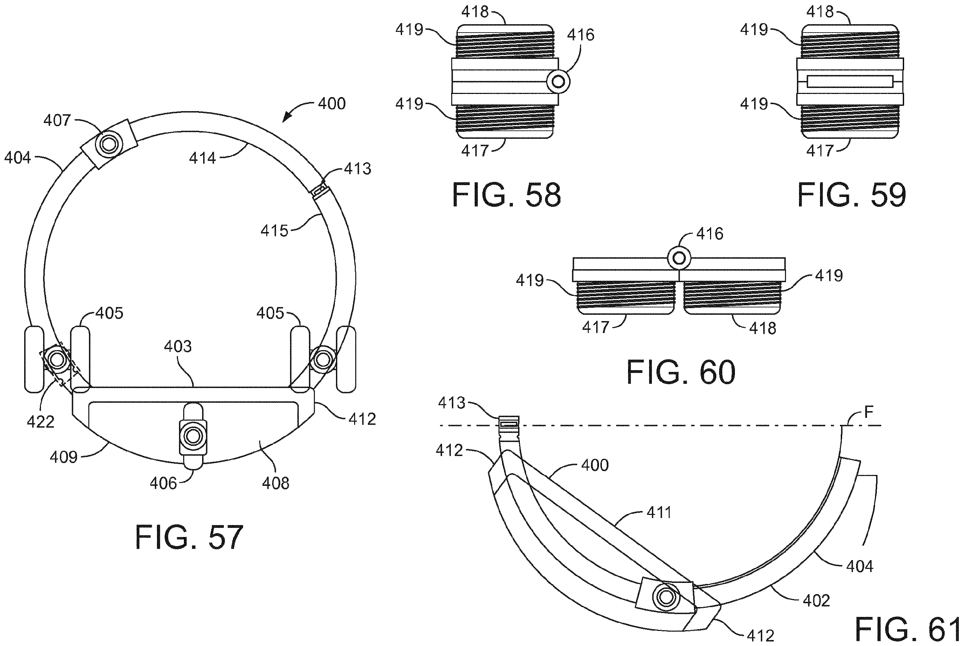

In some examples of the ride-on platform 400, the support member 402 may be foldable. Any suitable means for enabling the support member 402 to be foldable may be used, but in the examples shown in Figs. 55 to 57, the ring 404 comprises a rotatable coupling 413, such as a hinge and a diametrically opposed collar or connector for connecting two portions of the ring. The rotatable coupling 413 is configured to enable a portion of the ring 404 to be rotated out of the plane of the ring 404, thereby enabling the ring 404, and by extension the support member 402, to be folded for example generally in half, as shown in Fig 61 wherein the support member is shown in the folded configuration, folded about fold line F.

Although other configurations are envisaged, in the example shown, the ring 404 of the support member 402 comprises a first semi-circular portion 414 and a second semi-circular portion 415, wherein the rotatable coupling 413 rotatably couples the first 414 and second 415 portions. The support member 402 also comprises a fastener or connector 422, which may be substantially diametrically opposed to the rotatable coupling 413, configured to fasten the other two ends of the first 414 and second 415 semi-circular portions together. Enlarged views of the rotatable coupling 413 are shown in Figs. 58 to 60, wherein Figs. 58 and 59 show the coupling 413 in a closed configuration and Fig. 60 shows the coupling 413 in an open configuration in which the ring 404 would be folded.

The coupling 413 comprises a first 417 and a second 418 insert, rotatably coupled by hinge 416. The hinge 416 is offset such that, when folded, the first 414 and second 415 rotatable portions of the ring 404 lie generally against each other and so may be said to be generally in opposition. Inserts 417 and 418 are configured to be received by the tubular ends of the first 414 and second 415 rotatable portions of the ring 404. As such, they comprise a threaded portion 419 configured to engage with a corresponding thread portion provided within the ends of the tubular ring 404 portions 414, 415.

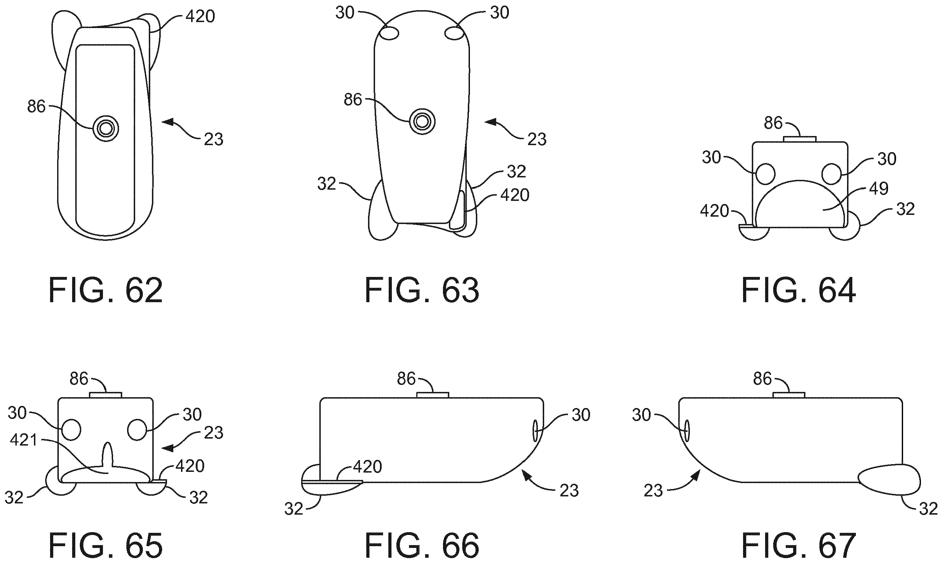

In some examples of the device or aid of the present invention, the lower carriage 23 may comprise a step 420 configured to be pressed or engaged by the foot of a user. Such a lower carriage 23 is shown in various views in Figs. 62 to 67. The lower carriage 23 comprises the step 420 generally towards the rear of the lower carriage 23 and to one side. In the example shown, the step is provided on the right hand side of the lower carriage 23 when the device is in use.

As can be seen, the lower carriage 23 in these figures is otherwise substantially the same as that discussed above in respect of the earlier figures and, as such, comprises headlights 30, a socket 86, and front 49 and rear 421 apertures through which the rim of the ground engageable wheel 2 rotates. The rear aperture 421 is generally T-shaped in a similar way to that of the upper carriage 7.

When a user presses down on the step 420 with one of their feet, they are able to pivot the upper carriage 7 such that the angle around the ground engageable wheel 2 between the upper carriage 7 and the lower carriage 23 may be varied, or selected (for example at predetermined positions such as back, middle and forward positions of the upper carriage 7), according to the user's preference. Such pivoting may facilitate the braking means 31 to engage, for example it may enable the brake pad 32 of the lower carriage 23 to more readily engage the ground.

It will be understood that the present invention may be adapted so that it may be used on either side of a user. As such, the stabilising arm of both the personal mobility aid and the child transportation device, as well as the child seat, child mount and related components, as well as any other components, may be provided on the opposite side of the ground-engageable wheel to that of the examples above, e.g. so that the invention may be adapted to be used either on the left or right hand side of a user.

It is envisaged that the person skilled in the art may make various changes to the embodiments specifically described above without departing from the scope of the invention.

## Claims

1. A wheeled personal mobility aid (1) comprising:
a centreless locomotive wheel (2);
a first carriage (7) configured to be moveable, such as by rotation, circumferentially around the wheel;
a user support means (10) for supporting a user while walking, the user support means being coupled to the carriage; wherein the user support means comprises an upper-limb engagement portion (11), such as an elbow rest, forearm rest, or shoulder rest (12), and a handle or handgrip (19); and
a second carriage (23) configured to be rotatable circumferentially around the wheel;
wherein the relative position of the second carriage and the first carriage about the wheel is substantially fixed by an arcuate bar (36) provided on an interior space of the centreless wheel, the arcuate bar being curved such that it generally follows the curvature of an inner circumference of the centreless wheel.

2. A wheeled child transportation device (201) comprising:
a centreless locomotive wheel (202);
a first carriage (207) configured to be moveable, such as by rotation, circumferentially around the wheel;
a user support means (10) coupled to the carriage for supporting a user while walking, the user support means comprising an upper limb engagement portion (211), such as an elbow rest, forearm rest or shoulder rest (12), and a handle or handgrip (19); and
a second carriage (223) configured to be rotatable circumferentially around the wheel;
wherein the second carriage comprises a child support means comprising a mount (336) for a child seat; wherein the relative position of the second carriage and the first carriage about the wheel is substantially fixed by an arcuate bar (36) provided on an interior space of the centreless wheel, the arcuate bar being curved such that it generally follows the curvature of an inner circumference of the centreless wheel.

3. The wheeled child transportation device (201) of claim 2, wherein the user support means (10) is configured such that the child transportation device may be propelled by a user applying a motive force upon the user support means, thereby causing the first (207) and second (223) carriages to rotate circumferentially around the wheel (202).

4. The wheeled personal mobility aid (1) or wheeled child transportation device (201) of any one of claims 1 to 3, wherein the user support means (10) is rotatably coupled to the first carriage (7; 207).

5. The wheeled personal mobility aid (1) or wheeled child transportation device (201) of any one of claims 1 to 4, wherein the user support means (10) comprises a height adjustment means for selectively spacing the user support means (10), or a portion thereof, with respect to the first carriage (7; 207).

6. The wheeled child transportation device (201) of any one of claims 2 to 5, wherein the child transportation device comprises mounting means (344, 345) for detachably attaching the child support means to the child transportation device.

7. The wheeled child transportation device (201) of any one of claims 2 to 6, wherein the child support means is substantially spaced away from the plane of rotation of the wheel (202).

8. The wheeled personal mobility aid (1) of any one of claims 1 to 7 or the wheeled child transportation device (201) of any one of claims 2 to 7, wherein the wheel (202) comprises a circumferential rail (9) and wherein the user support means (10) is configured to engage the rail.

9. The wheeled personal mobility aid (1) of any one of claims 1 to 8 or the wheeled child transportation device (201) of any one of claims 2 to 8, wherein the wheel (7; 207) is foldable, optionally wherein the wheel comprises at least two hinges (34, 35) circumferentially spaced from each other about the circumference of the wheel, optionally wherein at least two of the hinges are substantially diametrically opposed about the wheel with respect to each other.

10. The wheeled personal mobility aid (1) of any one of claims 1 to 9 or the wheeled child transportation device (201) of any one of claims 2 to 9, wherein the first (7; 207) and second carriages (23; 223) are generally diametrically opposed to each other with respect to the wheel (2).

11. The wheeled personal mobility aid (1) of any one of claims 1 to 10 or the wheeled child transportation device (201) of any one of claims 2 to 10, further comprising a stabiliser wheel (24; 224) positionable substantially to one side of the plane of rotation of the wheel, optionally wherein the stabiliser wheel (24; 224) is connected to the second carriage (23; 223) by an arm (25; 225) pivotably coupled to the second carriage, and optionally wherein the arm comprises a suspension mechanism (59) configured to provide suspension to the arm.

12. The wheeled personal mobility aid (1) or the wheeled child transportation device (201) of any one of claims 8 to 11, wherein at least one of the carriages (2; 202, 223; 223) includes a wheel-engagement means (50) comprising a plurality of wheels (52) configured to engage opposing sides of the circumferential rail (9), optionally wherein the circumferential rail (9) comprises two generally opposing concave surfaces (67, 68), optionally wherein the wheels (52) of the wheel-engagement means (50) of at least one of the carriages (7; 207, 23; 223) engage the generally opposing concave surfaces (67, 68).

13. The wheeled personal mobility aid (1) or the wheeled child transportation device (201) of any one of claims 1 to 12, wherein at least one of the carriages (7; 207, 23; 223) comprises a motor for rotating the wheel (2; 202) with respect to the carriage.

14. The wheeled child transportation device (201) of any one of claims 1 to 13, wherein the mount (336) for a child seat is arranged on the child support means such that, when a child seat is mounted to the mount, the child seat is generally spaced to one side of the plane of rotation of the wheel (2; 202).

15. The wheeled personal mobility aid (1) of any one of claims 1 to 14 or the wheeled child transportation device (201) of any one of claims 2 to 14, wherein the second carriage (23; 223) comprises actuating means configured to selectively adjusting the relative position of the second carriage about the wheel (2; 202) with respect to the first carriage (7; 207), optionally wherein the actuating means comprises foot-receiving means (420) configured to selectively adjust the relative position of the second carriage (23; 223) with respect to the first carriage (7; 207) by engaging their foot with the foot-receiving means.

## Patentansprüche

1. Personenmobilitätshilfe (1) auf Rädern, umfassend:
ein mittenfreies fahrbares Rad (2),
einen ersten Schlitten (7), der dazu ausgestaltet ist, umfangsmäßig wie mittels Drehung um das Rad herum beweglich zu sein,
ein Benutzerstützmittel (10) zum Stützen eines Benutzers während des Gehens, wobei das Benutzerstützmittel an den Schlitten gekoppelt ist, wobei das Benutzerstützmittel einen Abschnitt (11) zur Ineingriffnahme einer oberen Gliedmaße wie eine Ellenbogenstütze, eine Unterarmstütze oder eine Schulterstütze (12) sowie einen Griff oder einen Handgriff (19) umfasst, und
einen zweiten Schlitten (23), der dazu ausgestaltet ist, umfangsmäßig um das Rad herum drehbar zu sein,
wobei die Relativposition des zweiten Schlittens und des ersten Schlittens um das Rad durch eine in einem inneren Raum des mittenfreien Rads vorgesehene bogenförmige Stange (36) im Wesentlichen festgelegt ist, wobei die bogenförmige Stange so gekrümmt ist, dass sie allgemein der Krümmung eines inneren Umfangs des mittenfreien Rads folgt.

2. Vorrichtung (201) auf Rädern für den Transport von Kindern, umfassend:
ein mittenfreies fahrbares Rad (202),
einen ersten Schlitten (207), der dazu ausgestaltet ist, umfangsmäßig wie mittels Drehung um das Rad herum beweglich zu sein,
ein an den Schlitten gekoppeltes Benutzerstützmittel (10) zum Stützen eines Benutzers während des Gehens, wobei das Benutzerstützmittel einen Abschnitt (211) zur Ineingriffnahme einer oberen Gliedmaße wie eine Ellenbogenstütze, eine Unterarmstütze oder eine Schulterstütze (12) sowie einen Griff oder einen Handgriff (19) umfasst, und
einen zweiten Schlitten (223), der dazu ausgestaltet ist, umfangsmäßig um das Rad herum drehbar zu sein,
wobei der zweite Schlitten ein Kinderstützmittel umfasst, das eine Halterung (336) für einen Kindersitz umfasst, wobei die Relativposition des zweiten Schlittens und des ersten Schlittens um das Rad durch eine in einem inneren Raum des mittenfreien Rads vorgesehene bogenförmige Stange (36) im Wesentlichen festgelegt ist, wobei die bogenförmige Stange so gekrümmt ist, dass sie allgemein der Krümmung eines inneren Umfangs des mittenfreien Rads folgt.

3. Vorrichtung (201) auf Rädern für den Transport von Kindern nach Anspruch 2, wobei das Benutzerstützmittel (10) so ausgestaltet ist, dass die Vorrichtung für den Transport von Kindern durch einen Benutzer getrieben werden kann, der eine Bewegungskraft auf das Benutzerstützmittel ausübt, wodurch veranlasst wird, dass sich der erste (207) und der zweite (223) Schlitten umfangsmäßig um das Rad (202) drehen.

4. Personenmobilitätshilfe (1) auf Rädern oder Vorrichtung (201) auf Rädern für den Transport von Kindern nach einem der Ansprüche 1 bis 3, wobei das Benutzerstützmittel (10) drehbar an den ersten Schlitten (7; 207) gekoppelt ist.

5. Personenmobilitätshilfe (1) auf Rädern oder Vorrichtung (201) auf Rädern für den Transport von Kindern nach einem der Ansprüche 1 bis 4, wobei das Benutzerstützmittel (10) ein Höhenverstellmittel umfasst, um das Benutzerstützmittel (10) oder einen Teil davon gezielt bezüglich des ersten Schlittens (7; 207) zu beabstanden.

6. Vorrichtung (201) auf Rädern für den Transport von Kindern nach einem der Ansprüche 2 bis 5, wobei die Vorrichtung für den Transport von Kindern Montagemittel (344, 345) umfasst, um das Kinderstützmittel an der Vorrichtung für den Transport von Kindern anzubringen.

7. Vorrichtung (201) auf Rädern für den Transport von Kindern nach einem der Ansprüche 2 bis 6, wobei das Kinderstützmittel im Wesentlichen von der Rotationsebene des Rads (202) beabstandet ist.

8. Personenmobilitätshilfe (1) auf Rädern nach einem der Ansprüche 1 bis 7 oder Vorrichtung (201) auf Rädern für den Transport von Kindern nach einem der Ansprüche 2 bis 7, wobei das Rad (202) eine Umfangsschiene (9) umfasst und wobei das Benutzerstützmittel (10) zur Ineingriffnahme der Schiene ausgestaltet ist.

9. Personenmobilitätshilfe (1) auf Rädern nach einem der Ansprüche 1 bis 8 oder Vorrichtung (201) auf Rädern für den Transport von Kindern nach einem der Ansprüche 2 bis 8, wobei das Rad (7; 207) klappbar ist, optional wobei das Rad mindestens zwei Scharniere (34, 35) umfasst, die umfangsmäßig um den Umfang des Rads voneinander beabstandet sind, optional wobei mindestens zwei der Scharniere sich um das Rad im Wesentlichen diametral gegenüberliegen.

10. Personenmobilitätshilfe (1) auf Rädern nach einem der Ansprüche 1 bis 9 oder Vorrichtung (201) auf Rädern für den Transport von Kindern nach einem der Ansprüche 2 bis 9, wobei sich der erste (7; 207) und der zweite (23; 223) Schlitten bezüglich des Rads (2) allgemein diametral gegenüberliegen.

11. Personenmobilitätshilfe (1) auf Rädern nach einem der Ansprüche 1 bis 10 oder Vorrichtung (201) auf Rädern für den Transport von Kindern nach einem der Ansprüche 2 bis 10, ferner umfassend ein Stützrad (24; 224), das im Wesentlichen an einer Seite der Rotationsebene des Rads positionierbar ist, optional wobei das Stützrad (24; 224) über einen schwenkbar an den zweiten Schlitten gekoppelten Arm (25; 225) mit dem zweiten Schlitten (23; 223) verbunden ist, und optional wobei der Arm einen Aufhängungsmechanismus (59) umfasst, der zur Federung des Arms ausgestaltet ist.

12. Personenmobilitätshilfe (1) auf Rädern oder Vorrichtung (201) auf Rädern für den Transport von Kindern nach einem der Ansprüche 8 bis 11, wobei mindestens einer der Schlitten (2; 202, 223; 223) ein Radeingriffsmittel (50) aufweist, das eine Vielzahl von Rädern (52) umfasst, die dazu ausgestaltet sind, gegenüberliegende Seiten der Umfangsschiene (9) in Eingriff zu nehmen, optional wobei die Umfangsschiene (9) zwei allgemein gegenüberliegende konkave Flächen (67, 68) umfasst, optional wobei die Räder (52) des Radeingriffsmittels (50) mindestens eines der Schlitten (7; 207, 23; 223) die allgemein gegenüberliegenden konkaven Flächen (67, 68) in Eingriff nehmen.

13. Personenmobilitätshilfe (1) auf Rädern oder Vorrichtung (201) auf Rädern für den Transport von Kindern nach einem der Ansprüche 1 bis 12, wobei mindestens einer der Schlitten (7; 207, 23; 223) einen Motor zum Drehen des Rads (2; 202) bezüglich des Schlittens umfasst.

14. Vorrichtung (201) auf Rädern für den Transport von Kindern nach einem der Ansprüche 1 bis 13, wobei die Halterung (336) für einen Kindersitz so auf dem Kinderstützmittel angeordnet ist, dass der Kindersitz allgemein auf einer Seite der Rotationsebene des Rads (2; 202) beabstandet ist, wenn ein Kindersitz an der Halterung montiert ist.

15. Personenmobilitätshilfe (1) auf Rädern nach einem der Ansprüche 1 bis 14 oder Vorrichtung (201) auf Rädern für den Transport von Kindern nach einem der Ansprüche 2 bis 14, wobei der zweite Schlitten (23; 223) ein Betätigungsmittel umfasst, das dazu ausgestaltet ist, die Relativposition des zweiten Schlittens um das Rad (2; 202) bezüglich des ersten Schlittens (7; 207) gezielt zu verstellen, optional wobei das Betätigungsmittel ein Fußaufnahmemittel (420) umfasst, das dazu ausgestaltet ist, die Relativposition des zweiten Schlittens (23; 223) bezüglich des ersten Schlittens (7; 207) gezielt zu verstellen, indem ihr Fuß mit dem Fußaufnahmemittel in Eingriff genommen wird.

## Revendications

1. Aide à la mobilité personnelle sur roues (1) comprenant :
une roue motrice sans centre (2) ;
un premier chariot (7) configuré pour être mobile, par exemple par rotation, de manière circonférentielle autour de la roue ;
un moyen de support d'utilisateur (10) pour supporter un utilisateur pendant qu'il marche, le moyen de support d'utilisateur étant couplé au chariot ; le moyen de support d'utilisateur comprenant une partie de mise en prise de membre supérieur (11), telle qu'un appui de coude, un appui d'avant-bras ou un appui d'épaule (12), et une poignée ou une prise de main (19) ; et
un second chariot (23) configuré pour pouvoir tourner de manière circonférentielle autour de la roue ;
la position relative du second chariot et du premier chariot autour de la roue étant sensiblement fixée par une barre arquée (36) prévue sur un espace intérieur de la roue sans centre, la barre arquée étant incurvée de telle sorte qu'elle suit généralement la courbure d'une circonférence intérieure de la roue sans centre.

2. Dispositif de transport d'enfant sur roues (201) comprenant :
une roue motrice sans centre (202),
un premier chariot (207) configuré pour être déplaçable, par exemple par rotation, de manière circonférentielle autour de la roue ;
un moyen de support d'utilisateur (10) couplé au chariot pour supporter un utilisateur pendant la marche, le moyen de support d'utilisateur comprenant une partie de mise en prise de membre supérieur (211), telle qu'un appui de coude, un appui d'avant-bras ou un appui d'épaule (12), et une poignée ou une prise de main (19) ; et
un second chariot (223) configuré pour pouvoir tourner de manière circonférentielle autour de la roue ;
le second chariot comprenant un moyen de support d'enfant comprenant un support (336) pour un siège d'enfant ; la position relative du second chariot et du premier chariot autour de la roue étant sensiblement fixée par une barre arquée (36) prévue sur un espace intérieur de la roue sans centre, la barre arquée étant incurvée de telle sorte qu'elle suit généralement la courbure d'une circonférence intérieure de la roue sans centre.

3. Dispositif de transport d'enfant sur roues (201) selon la revendication 2, le moyen de support d'utilisateur (10) étant configuré de telle sorte que le dispositif de transport d'enfants peut être propulsé par un utilisateur appliquant une force motrice sur le moyen de support d'utilisateur, amenant ainsi les premier (207) et second (223) chariots à tourner circonférentiellement autour de la roue (202).

4. Aide à la mobilité personnelle sur roues (1) ou dispositif de transport d'enfant sur roues (201) selon l'une quelconque des revendications 1 à 3, le moyen de support d'utilisateur (10) étant couplé de manière rotative au premier chariot (7 ; 207).

5. Aide à la mobilité personnelle sur roues (1) ou dispositif de transport d'enfant sur roues (201) selon l'une quelconque des revendications 1 à 4, le moyen de support d'utilisateur (10) comprenant un moyen de réglage de la hauteur pour espacer sélectivement le moyen de support d'utilisateur (10), ou une partie de celui-ci, par rapport au premier chariot (7 ; 207).

6. Dispositif de transport d'enfant sur roues (201) selon l'une quelconque des revendications 2 à 5, le dispositif de transport d'enfants comprenant des moyens de montage (344, 345) pour fixer de manière amovible le moyen de support d'enfant au dispositif de transport d'enfants.

7. Dispositif de transport d'enfant sur roues (201) selon l'une quelconque des revendications 2 à 6, le moyen de support d'enfant étant sensiblement espacé du plan de rotation de la roue (202).

8. Aide à la mobilité personnelle sur roues (1) selon l'une quelconque des revendications 1 à 7, ou dispositif de transport d'enfant sur roues (201) selon l'une quelconque des revendications 2 à 7, la roue (202) comprenant un rail circonférentiel (9), et le moyen de support d'utilisateur (10) étant configuré pour venir en prise dans le rail.

9. Aide à la mobilité personnelle sur roues (1) selon l'une quelconque des revendications 1 à 8, ou dispositif de transport d'enfant sur roues (201) selon l'une quelconque des revendications 2 à 8, la roue (7 ; 207) étant pliable, éventuellement la roue comprenant au moins deux charnières (34, 35) espacées circonférentiellement l'une de l'autre autour de la circonférence de la roue, éventuellement au moins deux des charnières étant sensiblement diamétralement opposées autour de la roue l'une par rapport à l'autre.

10. Aide à la mobilité personnelle sur roues (1) selon l'une quelconque des revendications 1 à 9, ou dispositif de transport d'enfant sur roues (201) selon l'une quelconque des revendications 2 à 9, les premier (7 ; 207) et second chariots (23 ; 223) étant généralement diamétralement opposés l'un à l'autre par rapport à la roue (2).

11. Aide à la mobilité personnelle sur roues (1) selon l'une quelconque des revendications 1 à 10, ou dispositif de transport d'enfant sur roues (201) selon l'une quelconque des revendications 2 à 10, comprenant en outre une roue stabilisatrice (24, 224) positionnable sensiblement d'un côté du plan de rotation de la roue, éventuellement la roue stabilisatrice (24 ; 224) étant reliée au second chariot (23 ; 223) par un bras (25 ; 225) couplé de manière pivotante au second chariot, et éventuellement le bras comprenant un mécanisme de suspension (59) configuré pour fournir une suspension au bras.

12. Aide à la mobilité personnelle sur roues (1) ou dispositif de transport d'enfant sur roues (201) selon l'une quelconque des revendications 8 à 11, au moins l'un des chariots (2 ; 202, 223 ; 223) comprenant un moyen de mise en prise de roues (50) comprenant une pluralité de roues (52) configurées pour venir en prise sur des côtés opposés du rail circonférentiel (9), éventuellement le rail circonférentiel (9) comprenant deux surfaces concaves généralement opposées (67, 68), éventuellement les roues (52) du moyen de mise en prise de roues (50) d'au moins un des chariots (7 ; 207, 23 ; 223) venant en prise sur les surfaces concaves généralement opposées (67, 68) .

13. Aide à la mobilité personnelle sur roues (1) ou dispositif de transport d'enfant sur roues (201) selon l'une quelconque des revendications 1 à 12, au moins l'un des chariots (7 ; 207, 23 ; 223) comprenant un moteur pour faire tourner la roue (2 ; 202) par rapport au chariot.

14. Dispositif de transport d'enfant sur roues (201) selon l'une quelconque des revendications 1 à 13, le support (336) pour un siège d'enfant étant agencé sur le moyen de support d'enfant de telle sorte que, lorsqu'un siège d'enfant est monté sur le support, le siège d'enfant est généralement espacé d'un côté du plan de rotation de la roue (2 ; 202).

15. Aide à la mobilité personnelle sur roues (1) selon l'une quelconque des revendications 1 à 14, ou dispositif de transport d'enfant sur roues (201) selon l'une quelconque des revendications 2 à 14, le second chariot (23 ; 223) comprenant des moyens d'actionnement configurés pour ajuster sélectivement la position relative du second chariot autour de la roue (2 ; 202) par rapport au premier chariot (7 ; 207), éventuellement les moyens d'actionnement comprenant des moyens de réception de pied (420) configurés pour ajuster sélectivement la position relative du second chariot (23 ; 223) par rapport au premier chariot (7 ; 207) en mettant en prise leur pied avec les moyens de réception de pied.
